(19) Europäisches Patentamt / European Patent Office / Office européen des brevets

(11) **EP 3 528 026 B1**

(12) **EUROPÄISCHE PATENTSCHRIFT**

(45) Veröffentlichungstag und Bekanntmachung des Hinweises auf die Patenterteilung:
**06.05.2026   Patentblatt 2026/19**

(21) Anmeldenummer: **19167755.8**

(22) Anmeldetag: **07.03.2018**

(51) Internationale Patentklassifikation (IPC):
**G02B 13/00** (2006.01)    **G02B 13/06** (2006.01)
**B60R 1/26** (2022.01)    **B60R 1/28** (2022.01)
**H04N 23/55** (2023.01)    **H04N 23/58** (2023.01)

(52) Gemeinsame Patentklassifikation (CPC):
**G02B 13/0045; B60R 1/26; B60R 1/28;**
**G02B 13/06; H04N 23/55; H04N 23/58;**
B60R 2300/108; B60R 2300/304; B60R 2300/605;
B60R 2300/8046; B60R 2300/8066

(54) **KAMERASYSTEM FÜR EIN KRAFTFAHRZEUG, SPIEGELERSATZSYSTEM MIT EINEM SOLCHEN KAMERASYSTEM UND FAHRASSISTENZSYSTEM MIT EINEM SOLCHEN SYSTEM**

CAMERA SYSTEM FOR A MOTOR VEHICLE, MIRROR REPLACEMENT SYSTEM WITH SUCH A CAMERA SYSTEM AND DRIVER ASSISTANCE SYSTEM COMPRISING SUCH A SYSTEM

SYSTÈME DE CAMÉRA POUR UN VÉHICULE AUTOMOBILE, SYSTÈME DE REMPLACEMENT DE MIROIR DOTÉ D'UN TEL SYSTÈME DE CAMÉRA ET SYSTÈME D'AIDE À LA CONDUITE DOTÉ D'UN TEL SYSTÈME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **21.04.2017   DE 102017108569**

(43) Veröffentlichungstag der Anmeldung:
**21.08.2019   Patentblatt 2019/34**

(62) Dokumentnummer(n) der früheren Anmeldung(en) nach Art. 76 EPÜ:
**18160544.5 / 3 392 692**

(73) Patentinhaber: **MEKRA Lang GmbH & Co. KG**
**91465 Ergersheim (DE)**

(72) Erfinder:
• **Lang, Werner**
  **91465 Ergersheim (DE)**
• **Enz, Andreas**
  **91593 Burgbernheim (DE)**
• **Redlingshöfer, Andreas**
  **90619 Trautskirchen (DE)**

(74) Vertreter: **Alpspitz IP**
**Longinusstraße 1**
**81247 München (DE)**

(56) Entgegenhaltungen:
EP-A1- 2 881 927            EP-B1- 2 623 374
DE-A1- 102004 043 257      DE-A1- 102010 032 411
JP-A- 2003 219 226          JP-A- 2006 343 545
JP-A- 2009 058 648          US-A1- 2006 092 277

EP 3 528 026 B1

## Beschreibung

GEBIET DER ERFINDUNG

Die Erfindung bezieht sich auf ein Kamerasystem für ein Kraftfahrzeug, insbesondere ein Nutzfahrzeug. Ferner bezieht sich die Erfindung auf ein Spiegelersatzsystem für ein Kraftfahrzeug, das ein solches Kamerasystem enthält, und auf ein Fahrerassistenzsystem für ein Kraftfahrzeug, das ein solches Kamerasystem enthält.

STAND DER TECHNIK

Kamerasysteme finden an bzw. in einem Fahrzeug derzeit immer häufiger Einsatz, beispielsweise als ein Kamerasystem, das im Rahmen eines Ergänzungssystems für konventionelle Spiegel am Fahrzeug eingesetzt wird, beispielsweise um dem Fahrer eines Pkws eine Parkhilfe zu geben. Weiterhin finden Kamerasysteme zunehmend Einsatz im Rahmen von sogenannten Spiegelersatzsystemen, bei welchen Spiegel, die für ein Kraftfahrzeug vorgeschrieben sind, wie beispielsweise Außenspiegel (Hauptspiegel), Innenspiegel an Pkws oder Weitwinkelspiegel und Frontspiegel an Nutzfahrzeugen, vollständig ersetzt werden. Bei solchen Spiegelersatzsystemen wird dem Fahrer des Fahrzeugs das entsprechende Sichtfeld, das herkömmlicherweise durch einen Spiegel einsehbar gemacht wird, dauerhaft und in Echtzeit auf einem Monitor oder einer anderen Wiedergabeeinheit beispielsweise im Innenraum des Fahrzeugs angezeigt, so dass der Fahrer des Fahrzeugs jederzeit Einsicht in das entsprechende Sichtfeld nehmen kann, obwohl kein Spiegel vorgesehen ist. Weiterhin finden Kamerasysteme am Fahrzeug im Rahmen von sogenannten Fahrerassistenzsystemen (ADAS) Einsatz, bei welchen entweder ebenfalls die von den Kamerasystemen aufgenommenen Daten, beispielsweise in Abhängigkeit von der jeweilig vorliegenden Fahrsituation, dem Fahrer des Fahrzeugs angezeigt werden, oder aber bei denen die erfassten Bilddaten ausgewertet werden, um andere Komponenten des Fahrzeugs zu steuern, wie beispielsweise im Rahmen von Abstands- und/oder Hinderniserkennung, Fahrbahnzustanderkennung, Spurhalteassistenten, Verkehrszeichenerkennung usw.

Für den Einsatz am Fahrzeug ergeben sich entweder durch gesetzliche Vorschriften oder durch die Fragestellung bzw. den Einsatzzweck des Kamerasystems oftmals bestimmte Anforderungen an die Aufnahmeeinrichtung (z.B. Kamera) des Kamerasystems, beispielsweise im Hinblick auf die Auflösung, auf den Winkelbereich, den das Kamerasystem abzudecken hat, Anforderungen im Hinblick auf die Schärfe bezüglich der Bildtiefe und ähnlichem. Diese Anforderungen, beispielsweise um die gewünschten Daten aus den aufgenommenen Bilddaten extrahieren zu können, sind zeitweise zueinander gegenläufig, so dass beispielsweise gleichzeitig ein weiter Winkelbereich aufgenommen werden soll/muss und gleichzeitig in zumindest einem Bereich des aufgenommenen Winkelbereichs eine sehr hohe Auflösung und Tiefenschärfe erzielt werden muss. Daher ist es in der Regel erforderlich, für ein komplexeres Kamerasystem an einem Fahrzeug mehrere Aufnahmeeinheiten vorzusehen, auch wenn diese in gleiche bzw. überlappende Bereiche rund um das Fahrzeug gerichtet sind, und anschließend die durch die mehreren Aufnahmeeinheiten aufgenommenen Bilddaten zu kombinieren, beispielsweise zu einem gemeinsamen Bild. Alternativ kann durch Verwendung von mehreren Aufnahmeeinheiten jeder Aufnahmeeinheit eine eigene Aufgabe im Hinblick auf die verschiedenen, gegebenenfalls zueinander gegenläufigen Anforderungen zugewiesen werden und jeweils anschließend können diese mit den mehreren Aufnahmeeinheiten aufgenommenen Bilddaten derart analysiert werden, dass aus jedem Bild, beispielsweise für ein Fahrerassistenzsystem, die ihm zugewiesene und aus ihm zu entnehmende Information extrahiert wird.

Dies bedeutet in der Praxis, dass in der Regel beispielsweise bei einem Spiegelersatzsystem die einzelnen Sichtfelder durch jeweils einzelne Aufnahmeeinheiten aufgenommen werden müssen, d.h. mindesten eine Aufnahmeeinheit pro Sichtfeld. Im Stand der Technik sind dazu vor allem im Fahrzeugbereich Kamerasysteme vorgesehen, bei denen mehrere getrennte Bildsensoren und Optiken, das heißt getrennte Aufnahmeeinheiten, vorgesehen sind, deren Bilddaten anschließend mittels Stitching zusammengefasst werden. Alternativ ist es auch bekannt, eine gemeinsame Optik mit mehreren Bildsensoren vorzusehen, die dann zu einer größeren Bildsensorfläche zusammengefasst werden und somit ein größeres Bild mit einer gemeinsamen Optik, aber getrennten (mehreren) Bildsensoren, erfasst werden kann.

Aus der JP 2006343545 und der JP 2009058648 sind jeweils Kamerasysteme für einen Pkw bekannt, welche einen Bereich im Front oder Heckbereich des Pkw erfassen. Diese Kamerasysteme sind zusätzlich zu den herkömmlichen Fahrzeugspiegeln vorgesehen. Die Kamerasysteme weisen jeweils Linsenanordnungen auf, die eine spezielle Verzeichnungskurve besitzen, die innerhalb der abgebildeten Fläche auf dem Bildsensor einen Wendepunkt aufweisen.

Aus der EP 2 881 927 A1 ist eine Warneinrichtung für einen Pkw und eine Außenspiegeleinrichtung für ein Fahrzeug bekannt. Dies enthält am seitlichen Außenspiegel eine Bilderfassungseinheit, welche eine Umgebung des Pkws erfasst.

Aus der DE 10 2010 032 411 A1 ist eine Vorrichtung zur Überwachung der seitlichen und rückwärtigen Umgebung eines Nutzfahrzeugs bekannt. Dazu sind Zusatzkameras an Außenspiegeln des Zugfahrzeugs befestigt, die einen verhältnismäßig kleinen Erfassungsbereich, insbesondere unter bzw. bis hin zu 90° aufweisen.

Die Patentschrift EP 2 623 374 B1 offenbart ein Spiegelersatzsystem für ein Nutzfahrzeug zur Darstellung von gesetzlich vorgeschriebenen Sichtfeldern eines Hauptspiegels und eines Weitwinkelspiegels derselben Fahrzeugseite auf einer Anzeigeeinheit in einem Fahrerhaus des Nutzfahrzeugs. Gemäß der EP 2 623 374 B1 wird das angezeigte Bild so modifiziert, dass die Bilderstreckung in der Weitwinkelrichtung verringert ist.

AUFGABE DER ERFINDUNG

Davon ausgehend ist es Aufgabe der Erfindung, ein Spiegelersatzsystem mit einem Kamerasystem für ein Fahrzeug vorzusehen, bei dem möglichst flexibel auch komplexe Anforderungen an die Qualität und den Bereich der Bilddaten mit einer einzigen Aufnahmeeinheit, die einen einzigen Bildsensor mit einer einzigen Bildsensorfläche und ein einziges optisches Element enthält, realisiert werden können und eine verbesserte Darstellungsqualität für den Fahrer bietet. Weiter ist es Aufgabe, ein Fahrerassistenzsystem vorzusehen, das mit wenig Aufwand komplexe Bildaufnahmeanforderungen für das Fahrerassistenzsystem mittels eines Kamerasystems realisieren kann.

DARSTELLUNG DER ERFINDUNG

Diese Aufgabe wird mit einem Spiegelersatzsystem mit den Merkmalen des Anspruchs 1 und mit einem Fahrerassistenzsystem mit den Merkmalen des Anspruchs 14 gelöst. Bevorzugte Ausführungsformen sind in den abhängigen Ansprüchen angegeben.

Dabei ist in der vorliegenden Beschreibung unter einem Kamerasystem mit einer Aufnahmeeinheit, die ein optisches Element und einen Bildsensor mit einer Bildsensorfläche enthält, ein Kamerasystem zu verstehen, das mindestens eine Aufnahmeeinheit aufweist. Es können weitere Aufnahmeeinheiten im Rahmen des Kamerasystems vorgesehen sein, die entweder ebenfalls die Anforderungen des Anspruchs 1 an das Kamerasystem erfüllen oder aber verschieden ausgestaltet sind, beispielsweise um links bzw. rechts am Fahrzeug liegende Sichtfelder zu erfassen. Wesentlich ist, dass die in Anspruch 1 definierte Aufnahmeeinheit des Kamerasystems genau ein optisches Element und genau einen Bildsensor mit einer Bildsensorfläche enthält und weiter wie in Anspruch 1 definiert angepasst ist.

Dem für das Spiegelersatzsystem verwendeten Kamerasystem liegt der Gedanke zugrunde, das optische Element der Aufnahmeeinheit (z.B. Kamera) derart anzupassen, dass auf einem einzigen Bildsensor sowohl ein Bereich abgebildet werden kann, für den eine hohe Auflösung gefordert ist, als auch ein verhältnismäßig großer Winkel (Weitwinkel) mittels der Aufnahmeeinheit aufgenommen werden kann, und beide gemeinsam auf einem Bildsensor abgebildet werden können. Unter einem Bildsensor ist dabei eine im Wesentlichen ebene Aufzeichnungsfläche zu verstehen, wobei diejenige Fläche des Bildsensors, auf der tatsächlich das mit dem optischen Element erfasste Bild abgebildet wird, als die Bildsensorfläche bezeichnet wird. Die Bildsensorfläche, ebenso wie der Bildsensor, sind beispielsweise rechteckig, d.h. die Bildsensorfläche ist eine rechteckige Fläche, die an jeweils zwei zueinander parallelen Kanten des Rechtecks einen Rand mit Randpunkten aufweist. Der Bildsensor ist ebenfalls meist rechteckig und entspricht im Wesentlichen der Formgebung der Bildsensorfläche.

Das optische Element hat beispielsweise eine Anordnung von mehreren hintereinander geschalteten Linsen und ggf. weiteren optischen Bestandteilen und dient dazu, einen einfallenden Lichtstrahl auf den Bildsensor bzw. die Bildsensorfläche zu lenken, zu bündeln etc. Durch die Auswahl der Linsen und optischen Bauteile werden die Eigenschaften des optischen Elements bestimmt, insbesondere dessen Verzeichnung. Das optische Element weist eine optische Achse auf, die im Falle eines rotationssymmetrischen Systems die Rotationssymmetrieachse des Systems ist. Sowohl bei einem rotationssymmetrischen System als auch bei einem zur optischen Achse nicht rotationssymmetrischen System, ist entlang der optischen Achse in jedem Fall sichergestellt, dass die erfolgende Abbildung bzw. der Durchgang des einfallenden Lichtstrahls durch das optische Element verzeichnungsfrei ist, während mit zunehmendem Abstand von der optischen Achse eine Verzeichnung auftritt, die ein geometrischer Abbildungsfehler ist, der zu einer lokalen Veränderung des Abbildungsmaßstabs führt. Oft ist die Maßstabsänderung eine Änderung der Vergrößerung mit zunehmendem Abstand des Bildpunkts von der optischen Achse und, bei einem rotationssymmetrischen System, rotationssymmetrisch um einen Punkt, das sogenannte Verzeichnungszentrum, was dem Schnittpunkt der optischen Achse mit der Bildsensorfläche entspricht. Je nach optischem System kann die Verzeichnung unterschiedlich sein, beispielsweise bei einer kissenförmigen Verzeichnung nimmt die Vergrößerung zu den Rändern des Bildfelds zu, bei einer tonnenförmigen Verzeichnung zu den Rändern hin ab.

Die optische Achse ist ferner diejenige Achse, entlang derer ein einfallender Lichtstrahl in der Regel unabgelenkt das optische Element durchdringt und auf die Bildsensorfläche trifft.

Dem für das Spiegelersatzsystem verwendeten Kamerasystem für ein Kraftfahrzeug liegt somit der Gedanke zugrunde, die Verzeichnung des optischen Elements durch Einsatz und Auswahl von speziellen Linsenanordnungen als optisches Element aktiv so zu gestalten, dass einander sich eigentlich widersprechende Anforderungen, wie beispielsweise eine Weitwinkelabbildung, d.h. eine Abbildung mit großem Bildwinkel, und eine im Wesentlichen verzeichnungsfreie bzw. verzeichnungsarme Abbildung mit hoher Auflösung für die gewünschten Bildbereiche gleichzeitig erzielt werden können. Dazu weist das optische Element eine Verzeichnung mit einer Verzeichnungskurve $r = f(\alpha)$ auf, wobei $r$

der Abstand eines auf der Bildsensorfläche abgebildeten Gegenstandspunkts zum Schnittpunkt der optischen Achse mit der Bildsensorfläche ist und $\alpha$ der Winkel zwischen der optischen Achse des optischen Elements und dem vom Gegenstandspunkt in das optische Element einfallenden Strahl ist. Die Verzeichnungskurve $r = f(\alpha)$ hat einen Wendepunkt $(\alpha_w; r_w)$, vorzugsweise genau einen Wendepunkt $(\alpha_w; r_w)$ innerhalb von $0 < r(\alpha) < r_{max}$, wobei $r_{max}$ der Abstand $r = f(\alpha_{max})$ auf der Bildsensorfläche von der optischen Achse zu dem dazu am weitesten entfernt liegenden Randpunkt der Bildsensorfläche ist. Der Gegenstandspunkt ist dabei ein Punkt, von dem ein einfallender Lichtstrahl ausgeht, der mittels des einfallenden Lichtstrahls, der durch das optische Element gelangt, auf der Bildsensorfläche abgebildet wird. Der Winkel $\alpha$ zwischen der optischen Achse des optischen Elements und dem vom Gegenstandspunkt in das optische Element einfallenden Strahl entspricht dem für den entsprechenden Gegenstandspunkt minimal erforderlichen Objektivöffnungswinkel und wird im Folgenden als Gegenstandswinkel $\alpha$ bezeichnet. Mit anderen Worten ausgedrückt ist der Gegenstandswinkel $\alpha$ derjenige Winkel, der zwischen der optischen Achse und dem vom Gegenstandspunkt in das optische System einfallenden Lichtstrahl, solange dieser außerhalb des optischen Systems bzw. des optischen Elements ist, eingeschlossen wird. Für den Winkel $(90° - \alpha)$ gilt somit, dass dieser der Winkel zwischen dem einfallenden Lichtstrahl an dem Punkt, an dem der Lichtstrahl in das optische Element eintritt und einer durch diesen Punkt verlaufenden zur optischen Achse senkrechten Fläche ist.

Somit bezeichnet der Gegenstandswinkel $\alpha$ einen Winkel, der von einem Lichtstrahl, der von einem außerhalb des optischen Elements liegenden Gegenstandspunkt in das optische Element einfällt, und der optischen Achse eingeschlossen wird. Dieser Gegenstandspunkt wird entsprechend nach dem Durchgang durch das optische Element auf der Bildsensorfläche abgebildet.

Die Verzeichnungskurve $r = f(\alpha)$, die das optische Element hat, hat somit innerhalb der Bildsensorfläche einen Wendepunkt, für den die zweite Ableitung der Verzeichnungskurve $r = f(\alpha)$, also $r'' = f'(\alpha) = 0$ ist. Gleichzeitig weist in einem $\alpha$, r-Koordinatensystem in dem Bereich zwischen dem Ursprung der Verzeichnungskurve und dem am weitesten vom Ursprung auf der Bildsensorfläche entfernt liegenden Randpunkt der Bildsensorfläche die Verzeichnungskurve einen linksgekrümmten Bereich auf einer Seite des Wendepunkts und einen rechtsgekrümmten Bereich auf der anderen Seite des Wendepunkts auf, wobei ein rechtsgekrümmter Bereich $(r'' = f'(\alpha) < 0)$ im Bereich von $0° < \alpha < \alpha_w$ vorhanden ist und ein linksgekrümmter Bereich $(r'' = f'(\alpha) > 0)$ im Bereich $\alpha_w < \alpha < \alpha_{max}$ vorhanden ist, wobei $\alpha_{max}$ durch die Begrenzung der Bildsensorfläche definiert wird. $\alpha_{max}$ ist derjenige Winkel $\alpha$, der dem maximalen Abstand $r_{max}$ von der optischen Achse zu dem dazu am weitesten entfernt liegenden Randpunkt der Bildsensorfläche entspricht. Liegt die optische Achse beispielsweise mittig auf der Bildsensorfläche, d.h. im Flächenschwerpunkt eines im Wesentlichen rechteckigen Bildsensors, so entspricht $r_{max}$ dem Abstand von der optischen Achse auf der Bildsensorfläche zu einem (beliebigen) Eckpunkt des Rechtecks. Liegt die optische Achse außermittig, d.h. nicht im Flächenschwerpunkt der Bildsensorfläche, so ist $r_{max}$ durch den Abstand von der optischen Achse zu der von der optischen Achse am weitesten entfernt liegenden Ecke des Rechtecks bei einem im Wesentlichen rechteckigen Bildsensor definiert. Der Ursprung des $\alpha$, r-Koordinatensystems entspricht der optischen Achse auf der Bildsensorfläche.

Durch die Verwendung der beschriebenen Verzeichnungskurve $r = f(\alpha)$ kann somit ein bestimmter oder definierter, verhältnismäßig großer, verzeichnungsfreier oder im Wesentlichen verzeichnungsfrei abgebildeter Bereich in der Nähe des Schnittpunkts der optischen Achse mit dem Bildsensor bzw. der optischen Achse auf dem Bildsensor mit einer hohen Auflösung erzielt werden, während gleichzeitig ein großer Winkelbereich aufgenommen werden kann, in dem für größere $\alpha$, das heißt, weiter von der optischen Achse entfernt liegende Gegenstandspunkte, eine verhältnismäßig hohe Auflösung erzielt werden kann, die z.B. immer noch ausreichend für die Darstellung von z.B. gesetzlich geforderten Sichtfeldern ist. Dabei muss für die Aufnahmeeinheit keine Aufnahmeeinheit verwendet werden, welche eine extrem hohe Auflösung besitzt und somit große Datenmengen mit sich bringt. Eine Nachbearbeitung der Bilddaten zur Verzeichnungskorrektur, die ohnehin nicht die vorhandene Auflösung beeinflussen, insbesondere erhöhen, könnte, ist somit nicht oder weniger erforderlich.

Insbesondere ermöglicht die Verzeichnungskurve, die die Form einer S-Kurve hat, dass ein einziger Bildsensor mit einer verhältnismäßig niedrigen Auflösung dennoch in der Lage ist, eine Abbildung vorzunehmen, welche im Hinblick auf Schärfe, Auflösung und ähnliche Anforderungen sowie den Bildbereich es beispielsweise erlaubt, zwei Sichtfelder um ein Nutzfahrzeug durch eine einzige Aufnahmeeinheit abzubilden und im Rahmen eines Spiegelersatzsystems auf einen Monitor oder einer Anzeigeeinheit darzustellen, auch wenn eines der Sichtfelder das Sichtfeld eines Weitwinkelspiegels ist. Dadurch, dass ein Bildsensor bzw. eine Aufnahmeeinheit mit verhältnismäßig niedriger Auflösung verwendet werden kann, ist es möglich, das System kostengünstig zu gestalten und zu vereinfachen, da in einer Verarbeitungseinheit, welche die Daten der Aufnahmeeinheit verarbeitet, eine geringere Datenmenge verarbeitet werden muss und somit die die Datenmenge verarbeitenden Komponenten, wie z.B. die Recheneinheit oder der Arbeitsspeicher der Verarbeitungseinheit, kleiner und damit kostengünstiger ausgelegt werden können. Darüber hinaus ist bei ähnlichen Auslegungen der Verarbeitungseinheiten die Verarbeitungsgeschwindigkeit höher, bzw. die Systembelastung geringer, so dass einerseits eine schnelle Datenverarbeitung vorgenommen werden kann und andererseits die Verarbeitungseinheit, insbesondere das ihr zugrundeliegende elektronische System, weniger warm wird und somit ein leichteres Wärmemanagement möglich ist.

Neben der Tatsache, dass eine einzige, gemeinsame Aufnahmeeinheit beispielsweise die Daten von zwei Sichtfeldern erfassen kann, ist es nicht erforderlich, die Daten von getrennten Aufnahmeeinheiten zusammenzuführen, zumindest in dem Maß, in dem die eine, gemeinsame Aufnahmeeinheit den gewünschten Teilbereich der Fahrzeugumgebung erfasst. Ferner ist es einfacher, die wenigeren benötigten Aufnahmeeinheiten am Fahrzeug zu integrieren und anzuordnen.

Gleichzeitig kann durch die Verzeichnungskurve eine sehr hohe Auflösung dort erzielt werden, wo sie benötigt bzw. gefordert ist, d.h. in dem höchst relevanten Bereich der Fahrzeugumgebung, der innerhalb des erfassten Teilbereichs der Fahrzeugumgebung liegt. Schließlich ist es möglich, die gesamte Bildsensorfläche dahingehend auszunutzen, dass ausreichend hohe Auflösungen auf der gesamten Bildsensorfläche erzielt werden können, so dass ein von einer Datenverarbeitungseinheit ausgelesener Bereich des Bildsensors beispielsweise nach Bedarf auch auf dem Bildsensor verschoben werden kann, d.h. geändert werden kann. Eine solche Verschiebung (Panning) des ausgelesenen Bereichs kann beispielsweise fahrsituationsabhängig erfolgen, oder wenn der Fahrer des Fahrzeugs eine manuelle Verstellung des durch die Aufnahmeeinheit erfassten Bereichs und gegebenenfalls auf einer Wiedergabeeinheit am Fahrzeug dargestellten Bereichs wünscht. Dies bedeutet, dass es nicht erforderlich ist, für das Nachführen des eingesehenen Bereichs eine mechanische Nachführung der Aufnahmeeinheit vorzusehen. Vielmehr kann dies durch ein datentechnisches "Verschieben" des ausgelesenen Bereichs auf der Bildsensorfläche erfolgen, so dass das Kamerasystem kostengünstiger und robuster mit geringerer Ausfallwahrscheinlichkeit ist.

Bei einem rotationssymmetrischen optischen Element ist die Verzeichnungskurve $r = f(\alpha)$ ebenfalls rotationssymmetrisch, das heißt, für alle Winkel $\beta$ um die als Punkt abgebildete optische Achse auf dem Bildsensor identisch. Bei einem nicht-rotationssymmetrischen optischen Element ist es möglich, für verschiedene Teilwinkelbereiche um die auf dem Bildsensor abgebildete optische Achse unterschiedliche Verzeichnungskurven $r = f(\alpha)$ vorzusehen, d.h. $r_{\beta1} = f_{\beta1}(\alpha)$, $r_{\beta2} = f_{\beta2}(\alpha) ... r_{\beta n} = f_{\beta n}(\alpha)$, die für bestimmte Teilwinkelbereiche um die optische Achse auf dem Bildsensor gelten. Grundsätzlich können die Teilwinkelbereiche, in denen eine gemeinsame Verzeichnungskurve gilt, beliebig groß sein, solange Anordnungen von Linsen und anderen optischen Bauteilen zum optischen Element dies ermöglicht.

Vorzugsweise weist die Verzeichnungskurve $r = f(\alpha)$ des Kamerasystems genau einen Wendepunkt $(\alpha_w; r_w)$ innerhalb von $0 < r(\alpha) < r_{max}$ auf. Dies ermöglicht es, die zur Verfügung stehende Bildsensorfläche optimal im Hinblick auf die an Kamerasysteme an Fahrzeugen gestellten Anforderungen, insbesondere im Hinblick auf Auflösung und Genauigkeit einerseits und Winkelbereich des durch das Kamerasystem aufgenommenen Winkels andererseits, auszunützen.

Nach einer besonders bevorzugten Ausführungsform ist die Steigung $r' = dr/d\alpha$ der Verzeichnungskurve $r = f(\alpha)$ im Bereich $0 < \alpha < \alpha_w$ im Ursprung bzw. Nullpunkt $(r = f(0) = 0)$ der Verzeichnungskurve maximal. Dies bedeutet, dass in der unmittelbaren Nähe der optischen Achse auf der Bildsensorfläche die Steigung der Verzeichnungskurve $r = f(\alpha)$ maximal ist und sich danach, weiter in Richtung des Wendepunkts hin, verringert. Die Verzeichnungskurve muss dabei kein absolutes Maximum im Nullpunkt aufweisen, auch wenn dies nicht ausgeschlossen ist. Vielmehr ist es meist ausreichend, wenn im dargestellten Bereich der Verzeichnungskurve $r = f(\alpha)$ diese im Nullpunkt ein bezüglich des Bereichs $0° < \alpha < \alpha_w$ vorliegendes Maximum aufweist. Dies ermöglicht es, dass ein verhältnismäßig großer Bereich um die optische Achse bzw. ausgehend von der optischen Achse innerhalb dieses Bereichs mit maximaler bzw. verhältnismäßig großer Steigung der Verzeichnungskurve abgebildet werden kann, insbesondere im Hinblick auf bzw. verglichen mit herkömmlichen Verzeichnungskurven, wie beispielsweise einer äquidistanten Verzeichnungskurve. Dort ist der Abstand r für gleiche Winkel $\alpha$ kleiner auf der Bildsensorfläche als bei der Verzeichnungskurve, welche eine möglichst große Steigung im Bereich des Nullpunkts bzw. unmittelbar am Nullpunkt $\alpha = 0$, $r = 0$ aufweist.

Nach einer weiteren besonders bevorzugten Ausführungsform ist die Steigung $r' = dr/d\alpha$ für die Verzeichnungskurve $r = f(\alpha)$ im Wendepunkt $(\alpha_w; r_w)$ minimal. Ähnlich wie bezüglich einer im Nullpunkt der Verzeichnungskurve möglichst maximalen Steigung ist auch hier das Minimum nur als relatives Minimum für den abgebildeten Bereich der Verzeichnungskurve auf dem Bildsensor zu sehen und nicht zwangsweise als absolutes Minimum über die gesamte (virtuelle und ggf. außerhalb des Bildsensors liegende) Verzeichnungskurve. Vielmehr reicht es, wenn das Minimum ein Minimum im dargestellten Bereich bzw. im Bereich der Bildsensorfläche ist, also ein Minimum im Bereich von $0° < \alpha < \alpha_{max}$ ist.

Ebenso ist es bevorzugt, dass die Steigung $r' = dr/d\alpha$ der Verzeichnungskurve $r = f(\alpha)$ im Bereich $0° < \alpha < \alpha_{max}$ für $\alpha_{max}$, d.h. am maximalen Radius $r_{max}$, maximal ist. Auch dieses Maximum muss kein absolutes Maximum der Verzeichnungskurve sein. Vielmehr ist es ausreichend, wenn an diesem Ort das Maximum der Verzeichnungskurve für den Bereich $\alpha_w < \alpha < \alpha_{max}$ liegt.

Die Verzeichnungskurve, die die erwähnten Eigenschaften hat, lässt sich beispielsweise nach einer bevorzugten Ausführungsform durch eine Polynomfunktion $f(\alpha) = \sum_{i=0}^{n} \alpha_i \, \alpha^i$ realisieren. Alternativ

kann die Verzeichnungskurve $r = f(\alpha)$ auch durch einen Spline n-ten Grades, einen Polynomzug, vorgesehen werden. D.h. sie kann als eine Funktion, die stückweise aus Polynomen höchstens n-ten Grades zusammengesetzt ist, vorgesehen sein. In diesem Fall wird die Verzeichnungskurve somit nicht durch ein einziges Polynom, sondern durch mehrere, stückweise zusammengesetzte Polynome vorgesehen. Eine weitere Möglichkeit ist das Vorsehen einer Bézierkurve, was eine parametrisch modellierte Kurve ist, und somit ebenfalls die Anforderungen an (genau) einen Wendepunkt innerhalb des Bereiches von $0 < r < r_{max}$ vorsehen kann. Diese mathematischen Funktionen ermöglichen eine verhältnismäßig einfache Modellierung des optischen Elements, bzw. der Verzeichnungskurve des optischen Elements.

Bei einer besonders bevorzugten Ausführungsform sind der Flächenschwerpunkt der zumeist rechteckigen Bildsensorfläche und der Schnittpunkt der optischen Achse mit der Bildsensorfläche bzw. die Abbildung der optischen Achse auf der Bildsensorfläche zueinander versetzt. Dabei ist insbesondere die optische Achse bezüglich der Bildsensorfläche außermittig, d.h. sie ist nicht im Flächenschwerpunkt angeordnet. Dies ermöglicht es, noch gezielter und besser gewünschte Bereiche im Hinblick auf die Verzeichnung auf der Bildsensorfläche zu definieren und zu modellieren und durch eine Verarbeitungseinheit nach Bedarf auszuschneiden bzw. zu extrahieren, um sie beispielsweise dem Fahrer des Fahrzeugs auf einer Wiedergabeeinheit darzustellen oder um sie im Hinblick auf bestimmte Daten auszuwerten. Somit kann der interessierende Bereich über nahezu die gesamte Fläche des Bildsensors oder die gesamte Bildsensorfläche ausgewählt und durch die Datenverarbeitungseinheit ausgeschnitten bzw. ausgelesen und weiter verarbeitet werden.

Bevorzugterweise wird das optische Element durch eine Mehrzahl von hintereinander geschalteten Linsen, ggf. ergänzt durch weitere optische Bauteile, wie z.B. Filter, realisiert. Beispielsweise enthält das optische Element wenigstens eine Linse mit einer nichtteilkugelartigen Fläche, wenigstens eine asphärische Linse und/oder wenigstens eine Linse mit einer Freiformfläche. Besonders bevorzugt ist es, wenigstens zwei, in ihren Eigenschaften und Ausformungen zueinander unterschiedliche Linsen zu kombinieren, da dann damit ein optisches Element bereitgestellt werden kann, das (genau) einen Wendepunkt $(\alpha_w; r_w)$ in seiner Verzeichnungskurve $r = f(\alpha)$ aufweist. Wenn eine Reihe von rotationssymmetrischen Linsen mit verschiedenen Flächen hintereinander geschaltet wird, so ergibt sich eine Verzeichnungskurve $r = f(\alpha)$, die für jeden Rotationswinkel $\beta$ um die optische Achse identisch ist. In diesem Fall ist somit das optische Element insgesamt rotationssymmetrisch zu seiner optischen Achse ausgebildet. Dies ist insbesondere vorteilhaft, wenn der Aufnahmebereich ebenfalls im Wesentlichen eine rotationssymmetrische Anforderung, beispielsweise im Hinblick auf die Auflösung, aufweist.

Alternativ ist es auch möglich, ein optisches Element vorzusehen, das eine zu seiner optischen Achse nicht rotationssymmetrische Verzeichnung aufweist, so dass eine erste Verzeichnungskurve $r_{\beta1} = f(\alpha)$ für einen Rotationswinkel $\beta_1$ um die optische Achse sich von einer zweiten Verzeichnungskurve $r_{\beta2} = f(\alpha)$ für einen Rotationswinkel $\beta_2$ um die optische Achse unterscheidet. Vorzugsweise sind dabei jedoch die Verzeichnungskurven zumindest bereichsweise, also für bestimmte Winkelbereiche um die optische Achse, identisch oder sehr ähnlich, so dass den Anforderungen an Auflösung, Winkelbereich und Ähnliches bestimmter Bereiche des aufgenommenen Bilds jeweils entsprochen werden kann. Prinzipiell können beliebig viele Verzeichnungskurven $r_{\beta n} = f(\alpha)$ vorgesehen werden. Für eine nicht-rotationssymmetrische Verzeichnung ist es jedoch ausreichend, dass zumindest Teilbereiche mit einer ersten Verzeichnungskurve $r_{\beta1} = f(\alpha)$ bzw. einer zweiten Verzeichnungskurve $r_{\beta2} = f(\alpha)$ vorgesehen werden. Im Fall, dass eine nicht-rotationssymmetrische Verzeichnung vorgesehen werden soll, so ist es wünschenswert, dass das optische Element anamorph ist, d.h. in sich nicht rotationssymmetrisch ist, so dass abhängig vom Rotationswinkel um die optische Achse unterschiedliche Verzeichnungskurven vorhanden sind. Dabei ist es z.B. möglich, dass eine oder mehrere der Linsen, die das optische Element ausbilden, anamorph ist bzw. sind. Alternativ könnte beispielsweise auch eine zumindest teilweise bezüglich der optischen Achse des optischen Elements exzentrische Anordnung einzelner Linsen oder optischer Bauteile des optischen Elements gewählt werden.

Ferner enthält das Kamerasystem vorzugsweise zumindest eine Verarbeitungseinheit zum Verarbeiten der Daten der Aufnahmeeinheit und/oder eine Wiedergabeeinheit zur für den Fahrer des Fahrzeugs wahrnehmbaren Wiedergabe von mittels der Aufnahmeeinheit erfasster Information. Die Verarbeitungseinheit zur Verarbeitung der Daten kann beispielsweise im Rahmen eines allgemeinen Bordcomputers (ECU) des Fahrzeugs vorgesehen sein, oder sie kann eine separate Einheit sein, die speziell für das Kamerasystem vorgesehen ist, oder sie kann im Kamerasystem selbst integriert sein. Die Wiedergabeeinheit ist beispielsweise als Monitor, als mehrere Monitore, als Projektion auf andere Bauteile des Fahrzeugs oder Ähnliches ausgebildet. Die Wiedergabeeinheit kann neben einer visuellen Wiedergabeeinheit auch als Audiowiedergabeeinheit, beispielsweise zusätzlich oder ergänzend, gestaltet sein. Ferner kann sie eine Wiedergabeeinheit sein, die nur bei bestimmten Fahrsituationen den Fahrer beispielsweise warnt, im Rahmen eines Fahrerassistenzsystems, was wiederum durch eine visuelle Anzeige, eine akustische Anzeige oder aber auch eine haptische Anzeige, wie beispielsweise eine Vibration des Lenkrads, realisiert werden kann, wenn eine Auswertung der durch das Kamerasystem erfassten Bilddaten durch die Verarbeitungseinheit eine entsprechende Meldung an die Wiedergabe-

Erfindungsgemäß wird das Kamerasystem im Rahmen eines Spiegelersatzsystems eingesetzt. Spiegelersatzsysteme für Fahrzeuge werden zunehmend eingesetzt und ersetzen dabei herkömmliche Spiegel am bzw. im Fahrzeug. Welche Spiegel an einem Fahrzeug vorgeschrieben sind und somit im Rahmen eines Spiegelersatzsystems ersetzt werden können oder sollen, ist in der Regel durch gesetzliche Vorschriften, in Europa beispielsweise durch die Regelung Nr. 46 der Wirtschaftskommission der Vereinten Nationen für Europa (UN/ECE) (Addendum 45, Revision 6 derzeit vorliegend) vorgegeben. Davon zu unterscheiden sind sogenannte ergänzende Sichtsysteme, welche nicht vorgeschriebene Sichthilfen sind und einen Raum einsehbar machen, der nicht gemäß einer gesetzlichen Vorschrift zur dauerhaften und ununterbrochenen Einsichtnahme durch den Fahrer vorgesehen sein soll. Ein Beispiel für ein solches ergänzendes Sichtsystem ist beispielsweise im Rahmen von Einparkhilfen eine Rückfahrkamera an einem Fahrzeug.

In vielen Ländern der Welt sind für Personenkraftwagen ein im Fahrzeug vorgesehener Innenspiegel (gemäß ECE-R46 "Innenspiegel Gruppe I") und ein (kleiner) Hauptspiegel (gemäß ECE-R46 "Hauptspiegel (klein) Gruppe III") auf einer Fahrerseite und oftmals auch oft auf der Beifahrerseite vorgeschrieben. Für Nutzfahrzeuge ist in der Regel ein Innenspiegel nicht vorgeschrieben, da durch die Fahrerkabine des Nutzfahrzeugs eine ungehinderte Sicht durch das Fahrzeug nach hinten nicht möglich ist. Vielmehr sind in der Regel ein Hauptspiegel (groß) (gemäß ECE-R46 "Hauptspiegel (groß) Gruppe II") und ein Weitwinkelspiegel (gemäß ECE-R46 "Weitwinkelspiegel Gruppe IV") neben weiteren Spiegeln vorgeschrieben. Hauptspiegel sind dabei solche, die außen am Fahrzeug angebracht sind und vom Fahrer als Außenspiegel einsehbar sind. Am Nutzfahrzeug können je nach Ländervorgaben, weitere Spiegel, wie beispielsweise ein Nahbereichs-/Anfahrspiegel (gemäß ECE-R46 "Nahbereichs-/Anfahrspiegel Gruppe V") und/oder ein Frontspiegel (gemäß ECE-R46 "Frontspiegel Gruppe VI") vorgeschrieben sein.

Welche Bereiche rund um das Fahrzeug mit den verschiedenen Spiegeln eingesehen werden müssen und somit auch mittels eines Kamera-Monitorsystems einsehbar sein müssen, ist in den entsprechenden gesetzlichen Vorgaben einzelner Länder bzw. Gebiete/-Regionen vorgeschrieben. In der Regel wird dabei ein sogenanntes Sichtfeld definiert, das einen ebenen und horizontalen Teil der Fahrbahn rund um das Fahrzeug bezeichnet und welches dauerhaft, jederzeit und in Echtzeit vom Fahrer des Fahrzeugs einsehbar sein muss.

Beispielsweise ist das Sichtfeld des Innenspiegels eines Pkw im Rahmen der ECE-R46 so definiert, dass der Fahrzeugführer einen ebenen und horizontalen Teil der Fahrbahn übersehen kann, der zentrisch zur Längsmittelebene des Fahrzeugs liegt, 20 m breit ist und sich vom Horizont bis 60 m hinter den Augenpunkten des Fahrzeugführers erstreckt. Ein Sichtfeld für einen Hauptaußenrückspiegel für Pkw ist so definiert, bezüglich der Fahrerseite des Fahrzeugs, dass der Fahrzeugführer mindestens einen ebenen und horizontalen Teil der Fahrbahn von 5 m Breite einsehen kann, der fahrzeugseitig begrenzt ist durch eine zur senkrechten Längsmittelebene des Fahrzeugs parallele, durch den äußersten Punkt auf der Fahrerseite des Fahrzeugs verlaufende Ebene, und der sich vom Horizont bis 30 m hinter den Augenpunkten des Fahrzeugführers erstreckt. Weiter beinhaltet das Sichtfeld des Hauptaußenrückspiegels einen 1 m breiten Streifen der Fahrbahn, der fahrzeugseitig begrenzt ist durch eine zur senkrechten Längsmittelebene des Fahrzeugs parallele, durch den äußersten Punkt auf der Fahrerseite des Fahrzeugs verlaufende Ebene, und der 4 m hinter der durch die Augenpunkte des Fahrzeugführers verlaufende senkrechte Ebene beginnt. Ein Sichtfeld eines Außenrückspiegels auf der Beifahrerseite ist entsprechend auf der Beifahrerseite des Fahrzeugs definiert.

Ein Sichtfeld eines Hauptspiegels (Hauptaußenrückspiegels) auf der Fahrerseite (entsprechendes gilt für die Beifahrerseite) eines Nutzfahrzeugs ist beispielsweise in der ECE-R46 so definiert, dass der Fahrzeugführer mindestens einen ebenen und horizontalen Teil der Fahrbahn von 4 m Breite einsehen kann, der fahrzeugseitig begrenzt ist durch eine zur senkrechten Längsmittelebene des Fahrzeugs parallele, durch den äußersten Punkt auf der Fahrerseite des Fahrzeugs verlaufende Ebene, und der sich vom Horizont bis 20 m hinter den Augenpunkten des Fahrzeugführers erstreckt. Ferner beinhaltet dieses Sichtfeld einen 1 m breiten Streifen der Fahrbahn, der fahrzeugseitig begrenzt ist, durch eine zur senkrechten Längsmittelebene des Fahrzeugs parallele, durch den äußersten Punkt auf der Fahrerseite der Fahrzeugs verlaufende Ebene, und der 4 m hinter der durch die Augenpunkte des Fahrers verlaufenden senkrechten Ebene beginnt. Ein Sichtfeld eines Weitwinkelspiegels, der in der Regel nur an einem Nutzfahrzeug, nicht an einem Pkw, vorgesehen ist, ist so definiert, dass der Fahrzeugführer mindestens einen ebenen und horizontalen Teil der Fahrbahn von 15 m Breite einsehen kann, der fahrzeugseitig begrenzt ist durch eine zur senkrechten Längsmittelebene des Fahrzeugs parallele, durch den äußersten Punkt auf der Fahrerseite des Fahrzeugs verlaufende Ebene, und der sich mindestens 10 m bis 25 m hinter den Augenpunkten des Fahrzeugführers erstreckt. Weiter beinhaltet dieses Sichtfeld dieses Weitwinkelspiegels einen 4,5 m breiten Streifen der Fahrbahn, der fahrzeugseitig begrenzt ist durch eine zur senkrechten Längsmittelebene des Fahrzeugs parallele, durch den äußersten Punkt auf der Fahrerseite des Fahrzeugs verlaufende Ebene, und der 1,5 m hinter der durch die Augenpunkte des Fahrzeugführers verlaufenden senkrechten Ebene beginnt.

Gemäß ECE-R46 ist das Sichtfeld eines Nahbereichs- oder Anfahrspiegels beispielsweise so beschaffen, dass der Fahrzeugführer auf der Außenseite des Fahrzeugs mindestens einen ebenen und horizontalen Teil der Fahrbahn übersehen kann, der begrenzt ist durch: eine zur senkrechten Längsmittelebene des Fahrzeugs parallele, durch den äußersten Punkt auf der Beifahrerseite des Fahrzeugs verlaufende Ebene; eine dazu parallele Ebene, die in 2 m Abstand von dieser Ebene verläuft; eine Ebene, die 1,75 m hinter der durch die Augenpunkte des Fahrzeugführers hindurchgehenden senkrechten Ebene parallel zu dieser verläuft; eine senkrechte Ebene, die 1 m vor der durch die Augenpunkte des Fahrzugführers hindurchgehenden senkrechten Ebene parallel zu dieser verläuft oder eine Ebene, die durch den äußersten Punkt des Stoßfängers des Fahrzeugs verläuft, wenn diese Ebene weniger als 1 m vor der senkrechten Ebene durch die Augenpunkte des Fahrzeugführers parallelen Ebene liegt. Bei Fahrzeugen, bei denen das Sichtfeld eines Nahbereichs oder Anfahrspiegels durch einen Spiegel erfasst wird, der mehr als 2,4 m über dem Grund angebracht ist, bzw. durch eine entsprechende Aufnahmeeinrichtung erfasst wird, ist das beschriebene Sichtfeld erweitert, derart, dass der Fahrer einen flachen, horizontalen Bereich der Straße entlang der Seite des Fahrzeugs und außerhalb des oben definierten Sichtfelds eines Nahbereichs oder Anfahrspiegels einsehen kann, das vorne mit einem Radius vom 2 m abgerundet sein kann und begrenzt ist durch folgende Linien: in der Fahrzeugquerrichtung der Ebene, die in einem Abstand vom 4,5 m vor der Fahrzeugseitenebene verläuft; nach hinten die Ebene, die parallel zu einer vertikalen Ebene ist, die durch die Augenpunkte des Fahrzeugführers verläuft und 1,75 m hinter dieser Ebene angeordnet ist; nach vorne durch die Ebene, die parallel zu der vertikalen Ebene ist, die durch die Augenpunkte des Fahrers verläuft und 3 m vor dieser Ebene angeordnet ist.

Gemäß ECE-R46 ist ein Sichtfeld eines Frontspiegels schließlich so beschaffen, dass der Fahrzeugführer einen ebenen und horizontalen Teil der Fahrbahn übersehen bzw. einsehen kann, der begrenzt ist durch folgende Ebenen: eine senkrechte Querebene, die durch den vordersten Punkt an der Fahrzeugfront verläuft, eine senkrechte Querebene 2 m vor dieser Ebene; eine zur senkrechten Längsmittelebene des Fahrzeugs parallele, durch den äußersten Punkt auf der Fahrerseite des Fahrzeugs verlaufende Ebene, und eine zur senkrechten Längsmittelebene des Fahrzeugs parallele, in 2 m Abstand vom äußersten Punkt auf der Beifahrerseite des Fahrzeugs verlaufende Ebene.

Soweit in dieser Beschreibung auf Sichtfelder eines Hauptspiegels, eines Weitwinkelspiegels, eines Innenspiegels, eines Nahbereichsspiegels, eines Frontspiegels etc. Bezug genommen wird, so sind damit entsprechende Sichtfelder, wie sie in den nationalen vorliegenden Regelungen jeweils definiert sind und den beschriebenen Sichtfeldern der Spiegel entsprechen, gemeint. Sollten keine entsprechenden nationalen Regelungen bzw. Definitionen für Sichtfelder vorliegen, so sind die Abmessungen, wie sie beschrieben sind, als Definition für das jeweilige Sichtfeld anzusehen.

Bevorzugterweise ist das Spiegelersatzsystem, das neben einer Verarbeitungseinheit der von dem Kamerasystem erfassten Daten vorzugsweise eine Wiedergabeeinheit zur für den Fahrer des Fahrzeugs wahrnehmbaren Wiedergabe von mittels der Aufnahmeeinheit erfassten Information aufweist, derart gestaltet, dass die Wiedergabeeinheit die Daten für den Fahrer des Fahrzeugs einsehbar darstellt. Dies kann beispielsweise durch Monitore in oder außerhalb des Fahrzeugs, oder durch eine Projektion auf Bauteile des Fahrzeugs geschehen.

Das Spiegelersatzsystem ist angepasst, mindestens ein Sichtfeld für den Fahrer des Fahrzeugs auf der Wiedergabeeinheit einsehbar darzustellen, und zwar das Sichtfeld eines Hauptspiegels und das Sichtfeld eines Weitwinkelspiegels derselben Fahrzeugseite, die mit der gemeinsamen Aufnahmeeinheit des Kamerasystems mit einem gemeinsamen Bildsensor, d.h. einem einzigen Bildsensor, erfasst werden und für den Fahrer des Fahrzeugs auf der Wiedergabeeinheit dargestellt werden. Insbesondere durch die charakteristische Verzeichnungskurve des optischen Elements der Aufnahmeeinheit, die eine gemeinsame, einzige Aufnahmeeinheit für das Sichtfeld des Hauptspiegels und das Sichtfeld des Weitwinkelspiegels ist, ist es möglich, sowohl den verhältnismäßig großen darzustellenden Winkel, der für ein Sichtfeld eines Weitwinkelspiegels eines Nutzfahrzeugs erforderlich ist, als auch eine ausreichende Auflösung, insbesondere im Hinblick auf das Sichtfeld des Hauptspiegels und weiterhin im Hinblick auf die Tiefe, d.h. die Erstreckung des Sichtfelds des Hauptspiegels entlang des Nutzfahrzeugs nach hinten, vorzusehen.

Nach einer bevorzugten Ausführungsform, wenn mindestens zwei Sichtfelder und um das Fahrzeug für den Fahrer des Fahrzeugs einsehbar dargestellt werden und mittels derselben Aufnahmeeinheit, d.h. demselben optischen Element und demselben Bildsensor, erfasst werden, wird ein erstes Sichtfeld in einem ersten Bereich der Wiedergabeeinheit einsehbar dargestellt und ein zweites Sichtfeld in einem zweiten, von dem ersten Bereich optisch getrennten Bereich der Wiedergabeeinheit einsehbar dargestellt. Beispielsweise kann die optische Trennung dadurch erfolgen, dass auf einem gemeinsamen Monitor, d.h. einer gemeinsamen Anzeigeeinheit, mittels des Split-Screen-Verfahrens in zwei getrennten Bereichen das erste Sichtfeld bzw. das zweite Sichtfeld dargestellt wird. Wird beispielsweise das Sichtfeld eines Hauptspiegels und eines Weitwinkelspiegels erfasst, so kann in einem ersten Bereich das Sichtfeld eines Hauptspiegels und in einem darunter oder darüber liegenden zweiten Bereich das Sichtfeld eines Weitwinkelspiegels dargestellt werden, wobei zwischen den beiden Darstellungen bevorzugter Weise eine fest vorgegebene Trennung in beispielsweise Form einer Leiste oder eine eingeblendete optische Trennung, wie z.B. eine Linie, vorgesehen ist. D.h. die Verarbeitungseinheit extrahiert aus den aufgenommenen Bilddaten diejenigen, die im ersten Bereich darzustellen sind, und diejenigen, die im zweiten Bereich darzustellen sind. Damit ist für den Fahrer des Fahrzeugs gut erkennbar, welches Sichtfeld wo dargestellt wird. Die Darstellung der Sichtfelder in einem ersten bzw. in einem zweiten Bereich auf der Wiedergabeeinheit wird während des Betriebs des Fahrzeugs im Hinblick auf die Frage, wo welches Sichtfeld dargestellt wird, vorzugsweise nicht verändert.

Dazu ist es bevorzugt, dass die Verarbeitungseinheit angepasst ist, die von der Aufnahmeeinheit erhaltenen Daten in diejenigen zu trennen bzw. diejenigen zu extrahieren, die im ersten Bereich der Wiedergabeeinheit dargestellt werden, und diejenigen, die im zweiten Bereich der Wiedergabeeinheit dargestellt werden. Weitere Bildbearbeitung mittels der Verarbeitungseinheit kann selbstverständlich vorgenommen werden, so dass beispielsweise zusätzliche Information eingeblendet wird, auf Gefahren hingewiesen wird oder im Rahmen dessen, dass stets das gesamte Sichtfeld einsehbar dargestellt wird, dieses im dafür vorgesehenen Bereich vergrößert oder verkleinert wird, z.B. abhängig von der Fahrtrichtung und/oder Geschwindigkeit.

Dabei ist es möglich, dass die Daten für den ersten Bereich und die Daten für den zweiten Bereich aus zueinander überlappenden Gebieten auf dem Bildsensor extrahiert werden, d.h. dass das Gebiet auf dem Bildsensor, aus dem die Information für den ersten Bereich extrahiert wird, und das Gebiet auf dem Bildsensor, aus dem die Information für den zweiten Bereich extrahiert wird, miteinander, z.B. in der horizontalen Richtung, überlappen. Nach der Extraktion der Information aus dem Bildsensor können die extrahierten Bereiche digital vergrößert werden, ggf. mit unterschiedlichen Skalierungsfaktoren.

Statt einer Darstellung in zwei voneinander getrennten Bereichen auf der Wiedergabeeinheit können zwei Sichtfelder auch in einer einzigen, nahtlos aneinander angrenzenden Darstellung auf der Wiedergabeeinheit gezeigt werden (Panoramaansicht). Dies ist möglich, da die wiederzugebenden Daten mittels eines gemeinsamen Bildsensors erfasst werden und somit die gleiche Optik für das Erfassen beider Sichtfelder verwendet wird, so dass nicht zwei verschiedene Optiken mit unterschiedlicher Verzerrung zu einem nahtlosen Bild kombiniert werden müssen, was nur mit erheblichen, nachträglichem Anpassungs- und Berechnungsaufwand möglich ist. Dennoch können die beiden Bereiche, zumindest in diejenige Richtung, die senkrecht zu ihrer (virtuellen) Nahtstelle ist, mit unterschiedlichen Skalierungsfaktoren vergrößert oder verkleinert werden, also z.B. in vertikaler Richtung mit dem selben, aber in horizontaler Richtung mit einem unterschiedlichen Skalierungsfaktor.

Bevorzugterweise ist die Verarbeitungseinheit dabei angepasst, in Abhängigkeit von einer durch einen Sensor erfassten und der Verarbeitungseinheit übermittelten Information, wie beispielsweise der Fahrtrichtung des Fahrzeugs, die aus den von der Aufnahmeeinheit aufgenommenen Daten extrahierte Information für den ersten und/oder zweiten Bereich bezüglich ihrer Lage im von der Aufnahmeeinheit aufgenommenen Bild auf dem Bildsensor anzupassen. Wenn beispielsweise das Sichtfeld eines Weitwinkelspiegels und eines Hauptspiegels eines Nutzfahrzeugs mittels der Aufnahmeeinheit erfasst werden, so kann beispielsweise ein Fahrtrichtungssensor, zum Beispiel ein Sensor, der den Lenkwinkel erfasst, Daten liefern, die die Verarbeitungseinheit veranlassen, das Gebiet anzupassen, aus dem die Information entnommen wird, die dem Fahrer auf der Wiedergabeeinheit dargestellt wird. Beispielsweise kann bei einer Geradeausfahrt die darzustellende Information für das Sichtfeld des Hauptspiegels in einem ersten Gebiet auf der Bildsensorfläche liegen, während diese Information bei einer Kurvenfahrt, wie beispielsweise einem Abbiegevorgang, in einem zweiten Gebiet auf der Bildsensorfläche liegen kann. Entsprechend wird somit das gewünschte, einsehbare Gebiet ohne eigentliches Verschwenken der Aufnahmeeinheit nachgeführt. Die Verzeichnungskurve mit dem Wendepunkt im Bereich der Bildsensorfläche ermöglicht es, dass auch bei einer Verschiebung des extrahierten Gebiets auf dem Bildsensor eine bestmögliche und ausreichende Schärfe des Bilds gewährleistet ist. Insbesondere wird somit der ausgelesene Bereich der Bildsensorfläche so verschoben (sogenanntes Panning), dass er dem Fahrer bestmögliche Einsicht in die Sichtfelder ermöglicht, und kann, aufgrund der Verzeichnungskurve der Aufnahmeeinheit, auch so verschoben werden, dass er ohne wesentliche Verzeichnungskorrektur oder Bildbearbeitung genutzt werden kann. Ein mechanisches Nachführen der Aufnahmeeinheit ist somit nicht mehr erforderlich.

Dies kann auch genutzt werden, wenn der Fahrer des Fahrzeugs manuell den durch das Kamera-Monitor-System verwirklichten virtuellen Spiegel einem Spiegel entsprechend einstellen möchte.

Als Sensor kann dabei, je nach Bedarf, ein einziger Fahrzeugsensor eingesetzt werden oder es kann eine Kombination aus mindestens zwei Fahrzeugsensoren eingesetzt werden, beispielsweise funktionsmäßig gleiche Sensoren von verschiedenen Seiten des Fahrzeugs (z.B. Radsensoren) oder verschiedenartige Sensoren.

Auch ein anderer Sensor als ein solcher, der die Fahrtrichtung des Fahrzeugs angibt, kann die Verschiebung des extrahierten Informationsgebiets auf der Bildsensorfläche auslösen.

Erfindungsgemäß ist bei dem Spiegelersatzsystem die Anordnung der optischen Achse der Aufnahmeeinheit, insbesondere des optischen Elements der Aufnahmeeinheit, so ausgerichtet, dass sie eines der Sichtfelder schneidet. Die optische Achse kreuzt dabei das Sichtfeld auf einem ebenen, horizontalen Teil der Fahrbahn in einem Kreuzungspunkt im Abstand von maximal 5 m zu einer Seitenbegrenzungslinie des Fahrzeugs, wobei die Seitenbegrenzungslinie eine Schnittlinie einer zur Fahrzeuglängsmittelebene parallelen Ebene ist, die durch einen am weitesten außen bzw. seitlich am weitesten außen liegenden Punkt des Fahrzeugs verläuft. Dadurch ist es möglich, dass eine Sichtstrecke, die durch diesen Kreuzungspunkt verläuft, und die durch die Begrenzung des Sichtfelds des Hauptspiegels begrenzt ist, in demjenigen Bereich der Verzeichnungskurve liegt, der eine Rechtskrümmung aufweist, das heißt in demjenigen Bereich, für den die zweite Ableitung der Verzeichnungskurve kleiner als 0 (r" = f "($\alpha$) < 0) ist. Dabei liegt der Wendepunkt der Verzeichnungskurve vorteilhafterweise außerhalb dieser Sichtstrecke. Dadurch ist es möglich, dass dieser Bereich im Vergleich zu herkömmlichen Verzeichnungskurven für einen Winkel $\alpha$ des einfallenden Lichtstrahls eine verhältnismäßig große Fläche auf dem Bildsensor einnimmt und somit mit hoher Auflösung dargestellt werden kann.

Nach einer bevorzugten Ausführungsform ist das Spiegelersatzsystem angepasst, einen Teil des Fahrzeugs mittels der Aufnahmeeinheit zu erfassen und auf der Wiedergabeeinheit für den Fahrer des Fahrzeugs einsehbar darzustellen. Dies ermöglicht es, dass der Fahrer sich leicht orientieren kann und andererseits, insbesondere bei Nutzfahrzeugen, eine gute Übersicht über die räumliche Lage des Nutzfahrzeugs und etwaige Hindernisse hat.

Alternativ oder ergänzend zu einem Spiegelersatzsystem kann das Kamerasystem für ein Fahrerassistenzsystem (ADAS) eingesetzt werden. Dabei ist es möglich, die erfasste Information beispielsweise im Hinblick auf andere Fahrzeugumgebungsinformation auszuwerten, beispielsweise das Vorhandensein von Spurlinien, Verkehrszeichen, anderen Verkehrsteilnehmern und Ähnliches, und beispielsweise diese Information einer adaptiven Geschwindigkeitsregelanlage (AGR, ADR, STA), einem Notbremsassistenten (ANB), einem aktiven Spurhalteassistenten (LKA, LKAS), einem Spurwechselassistenten oder Ähnlichem, die Teil des Fahrerassistenzsystems (ADAS) sind oder dieses bilden, zuzuführen und mittels einer Steuereinheit entsprechende Ausgaben an andere Fahrzeugkomponenten zu tätigen.

Dabei ist bei einer besonders bevorzugten Ausführungsform das Kamerasystem in Vorwärtsfahrtrichtung des Fahrzeugs gesehen nach vorne gerichtet. Dies ist insbesondere für automatische Abstandskontrolle oder Ähnliches vorteilhaft. Die bei einem Fahrerassistenzsystem erfasste Information kann zusätzlich, entweder im Rahmen eines Spiegelersatzsystems oder im Rahmen eines anderen Hilfssystems, einem Fahrer ausgegeben und/oder angezeigt werden. Beispielsweise ist es möglich, entsprechende Warnhinweise mittels Audiosignalen, mittels haptischer Signale oder Ähnlichem, beispielsweise einem Rütteln des Lenkrads, dem Fahrer auszugeben und diesen beispielsweise vor einer gefährlichen Situation zu warnen.

## KURZE BESCHREIBUNG DER FIGUREN

Nachfolgend wird die Erfindung rein beispielhaft anhand der beigefügten Figuren beschrieben, wobei

Figur 1 eine schematische Ansicht eines Spiegelersatzsystems ist, das ein Kamerasystem gemäß der Erfindung einsetzt;

Figur 2 eine perspektivische Ansicht eines Nutzfahrzeugs mit einem Kamerasystem gemäß der Erfindung ist;

Figur 3 eine vereinfachte Schnittansicht der wesentlichen Bauteile des Kamerasystems ist;

Figur 4 eine perspektivische Ansicht entsprechend Figur 3 der wesentlichen Bauteile des Kamerasystems ist;

Figur 5 eine Ausführungsform eines Aufbaus des optischen Elements der Aufnahmeeinheit des Kamerasystems schematisch in geschnittener perspektivischer Ansicht veranschaulicht;

Figur 6 eine weitere Ausführungsform des detaillierten Aufbaus des optischen Elements der Aufnahmeeinheit des Kamerasystems in geschnittener perspektivischer Ansicht ist;

Figur 7 die Verzeichnungskurve des optischen Elements der Aufnahmeeinheit des Kamerasystems in einem $\alpha$, r-Koordinatensystem zeigt;

Figur 8 die erste Ableitung der Verzeichnungskurve des optischen Elements der Aufnahmeeinheit des Kamerasystems zeigt;

Figur 9 die zweite Ableitung der Verzeichnungskurve des optischen Elements der Aufnahmeeinheit des Kamerasystems zeigt;

Figur 10a die Verzeichnungskurve des optischen Elements der Aufnahmeeinheit des Kamerasystems im Vergleich zu herkömmlichen Verzeichnungskurven zeigt;

Figur 10b ein Detail aus Figur 10a ist, das die Verzeichnungskurven um den Ursprung der Verzeichnungskurve zeigt;

Figur 11 eine schematische Ansicht des Bildsensors der Aufnahmeeinheit ist, wobei Sichtfelder eines Hauptspiegels und eines Weitwinkelspiegels entsprechend Figur 2 eingezeichnet sind;

Figur 12 Details der Verzeichnungskurve der Aufnahmeeinheit des Kamerasystems für die in Figur 11 gezeigte Ausführungsform zeigt;

Figur 13 eine schematische Draufsicht auf ein Nutzfahrzeug ist, die die Bewegung eines darzustellenden Bereichs abhängig von Fahrzuständen des Fahrzeugs schematisch zeigt; und

Figur 14 eine schematische Ansicht einer Bildsensorfläche der Aufnahmeeinheit des Kamerasystems ist, welche die Verschiebung der interessierenden Bereiche gemäß Figur 13 auf der Bildsensorfläche veranschaulicht.

## BESCHREIBUNG BEVORZUGTER AUSFÜHRUNGSFORMEN

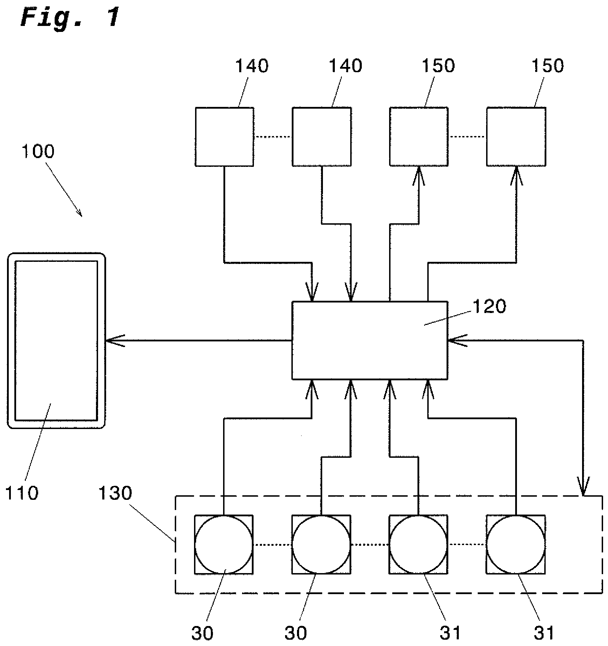

In Figur 1 ist schematisch ein Spiegelersatzsystem 100 für beispielsweise ein Nutzfahrzeug gezeigt. Das Spiegelersatzsystem 100 kann im Rahmen eines Fahrerassistenzsystems integriert sein oder als alleiniges Spiegelersatzsystem 100 zum Einsatz kommen. Das Spiegelersatzsystem 100 enthält ein Kamerasystem 130, eine Verarbeitungseinheit 120 und eine Wiedergabeeinheit 110. Vom Kamerasystem 130 aufgenommene Bilddaten werden an die Verarbeitungseinheit 120 zugeführt, die wiederum nach entsprechender Verarbeitung diese Bilddaten einer Wiedergabeeinheit 110 zu einer für den Fahrer des Fahrzeugs einsehbaren Darstellung zuführt. Das Spiegelersatzsystem 100 kann ferner mit einem oder mehreren Fahrzeugsensoren 140 gekoppelt sein, die der Verarbeitungseinheit 120 ebenfalls Daten zuführen, wie beispielsweise den aktuellen Fahrzustand (Lenkwinkel, Geschwindigkeit, Fahrtrichtung) des Fahrzeugs, welche die Verarbeitungseinheit 120 bei der Verarbeitung der von dem Kamerasystem 130 erhaltenen Daten berücksichtigt. Der bzw. die Fahrzeugsensoren 140 könnten alternativ auch direkt mit dem Kamerasystem 130 gekoppelt sein, so dass dieses unmittelbar in Abhängigkeit von dem bzw. den Fahrzeugsensoren 140 empfangenen Daten gesteuert wird. Entsprechend ist es auch möglich, dass die Verarbeitungseinheit 120 an das Kamerasystem 130 Daten zur Steuerung des Kamerasystems 130 ausgibt.

Die Verarbeitungseinheit 120 kann als vom Kamerasystem 130 getrennte Verarbeitungseinheit vorgesehen sein, beispielsweise in Form eines Bordcomputers des Fahrzeugs, oder sie kann alternativ in das Kamerasystem 130 integriert sein. Die Wiedergabeeinheit 110 ist beispielsweise ein im Fahrzeug angebrachter Monitor, auf dem die von der Verarbeitungseinheit 120 bereitgestellten Daten für den Fahrer des Fahrzeugs einsehbar dargestellt werden. Alternativ, statt eines im Fahrzeug vorgesehenen Monitors, könnte auch eine außerhalb des Fahrzeugs, beispielsweise im Bereich von herkömmlichen Fahrzeugspiegeln vorgesehene Wiedergabeeinrichtung vorgesehen werden. Weiterhin könnte die Wiedergabeeinheit in Form einer Projektion auf eine Fahrzeugstrukturkomponente im Innenraum des Fahrzeugs verwirklicht sein. Im Hinblick auf die Wiedergabeeinheit 110 ist ferner festzuhalten, dass neben der dargestellten Ausführungsform, bei der ein Monitor zur Wiedergabe der Daten, die von der Verarbeitungseinheit 120 bereitgestellt sind, auch mehrere, separate Monitore oder Anzeigeeinrichtungen die Wiedergabeeinheit bilden können. Diese können, nach Bedarf, gleich oder unterschiedlich zueinander ausgebildet sein.

Ferner ist das Spiegelersatzsystem 100, insbesondere wenn es im Rahmen eines Fahrerassistenzsystems (ADAS) verwendet wird, und insbesondere dessen Verarbeitungseinheit 120, nach Bedarf mit weiteren Informations- oder Steuerkomponenten des Fahrzeugs 150 verbunden, die wiederum Anzeigemittel für den Fahrer, beispielsweise Audioanzeigegeräte, oder aber direkt das Fahrzeug steuernde Komponenten, wie beispielsweise Lenkhilfen, sein können.

Das Kamerasystem 130 enthält mindestens eine Aufnahmeeinheit 30, die nachfolgend genauer beschrieben wird, kann jedoch auch mehrere Aufnahmeeinheiten 30 der beschriebenen Art enthalten. Darüber hinaus können weitere Aufnahmeeinheiten 31 vorgesehen sein, welche die an die Aufnahmeeinheiten 30 gestellten Anforderungen nicht unbedingt erfüllen müssen. Entsprechend ist es möglich, dass die Verarbeitungseinheit, wie in Figur 1 angedeutet, direkt von den einzelnen Aufnahmeeinheiten 30 bzw. 31 Bilddaten empfängt, statt dass die Verarbeitungseinheit 120 diese vom allgemeinen Kamerasystem 130 empfängt. Entsprechend kann die Verarbeitungseinheit 120 auch Steuersignale direkt an die einzelnen Aufnahmeeinheiten 30, 31 senden.

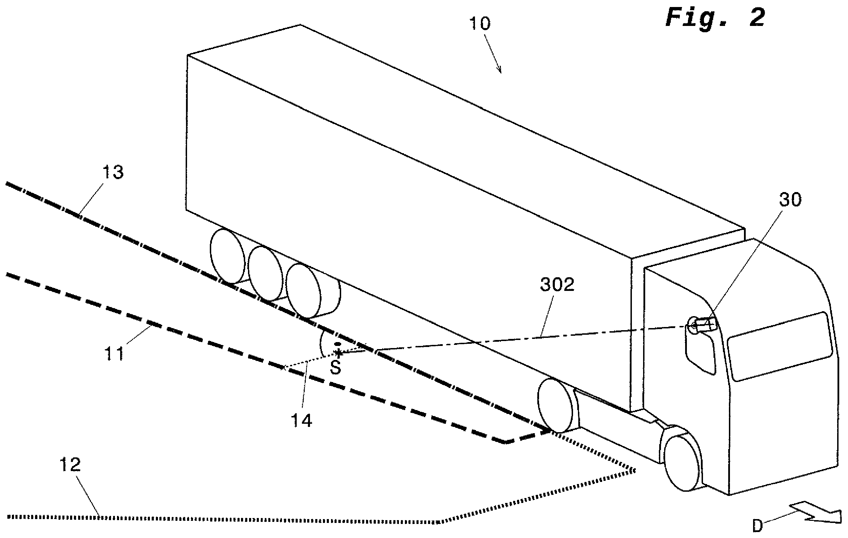

Figur 2 zeigt in perspektivischer Ansicht ein Nutzfahrzeug 10, das mit einem Spiegelersatzsystem 100 gemäß Figur 1 ausgerüstet ist. Entsprechend sind an dem Nutzfahrzeug 10 eine oder mehrere Aufnahmeeinheiten 30 angebracht. Wie in Figur 2 dargestellt, ist das beispielhafte Spiegelersatzsystem 100, das an dem Nutzfahrzeug 10 angebracht ist, ausgelegt, ein Sichtfeld 11 eines Hauptspiegels und ein Sichtfeld 12 eines Weitwinkelspiegels mittels der Aufnahmeeinheit 30 zu erfassen und für den Fahrer des Nutzfahrzeugs 10 einsehbar im oder am Führerhaus des Fahrzeugs 10 darzustellen. In Figur 2 sind das Sichtfeld 11 eines Hauptspiegels und das Sichtfeld 12 eines Weitwinkelspiegels schematisch mit gestrichelten Linien (Sichtfeld 11 eines Hauptspiegels mit langgestrichelten Linien, Sichtfeld 12 eines Weitwinkelspiegels mit kürzer gestrichelten Linien) auf der ebenen Fahrbahnoberfläche neben dem Fahrzeug 10 eingezeichnet.

In Figur 2 ist ferner die Vorwärtsfahrtrichtung mittels eines Pfeils D bezeichnet. Sämtliche Richtungsangaben in dieser Beschreibung, das heißt vorne, hinten, links, rechts, etc., beziehen sich auf diese Vorwärtsfahrtrichtung D des Fahrzeugs.

Das in Figur 2 dargestellt Sichtfeld 1 des Hauptspiegels erstreckt sich von einer Seitenbegrenzungslinie 13 des Fahrzeugs aus in seitlicher Richtung weg vom Fahrzeug und nach hinten. Die Seitenbegrenzungslinie 13 ist eine Linie, die durch den Schnitt der ebenen, horizontalen Fahrbahn mit einer zur Längsmittelebene (nicht dargestellt) des Fahrzeugs parallelen Ebene, die durch den in seitlicher Richtung am weitesten außen liegenden Punkt des Fahrzeugs verläuft, definiert ist.

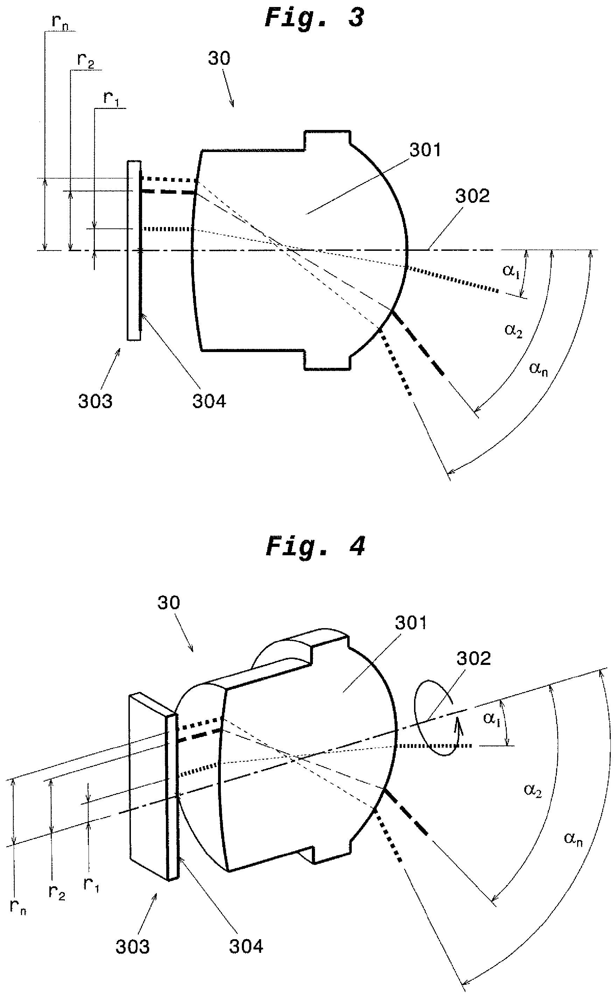

Die optische Achse 302 des optischen Elements 301 (Figuren 3, 4) der Aufnahmeeinheit 30, die beispielsweise durch eine Kamera vorgesehen wird, erstreckt sich in seitlicher Richtung unter einem Winkel zur Fahrzeuglängsmittelebene und zur Fahrbahnoberfläche derart, dass sie das Sichtfeld 11 eines Hauptspiegels auf der Fahrbahnoberfläche kreuzt. Das bedeutet, dass der Schnittpunkt S bzw. Kreuzungspunkt der optischen Achse 302 mit der Fahrbahnoberfläche innerhalb des Sichtfelds 11 eines Hauptspiegels bei der in Figur 2 dargestellten Ausführungsform liegt. Bevorzugterweise liegt dieser Schnittpunkt S maximal 6 m in Fahrzeuglängsrichtung gesehen hinter der Aufnahmeeinheit 30, weiter vorzugsweise im Bereich von 4 bis 5 m.

In Figur 2 ist ferner mit dünnen gepunkteten Linien eine Sichtstrecke 14 eingezeichnet, die durch denjenigen Abschnitt einer Linie, die senkrecht zur Seitenbegrenzungslinie 13 ist und durch den Schnittpunkt S der optischen Achse 302 mit der Fahrbahnoberfläche verläuft, bestimmt ist, der innerhalb des Bereichs des Sichtfelds 11 des Hauptspiegels liegt.

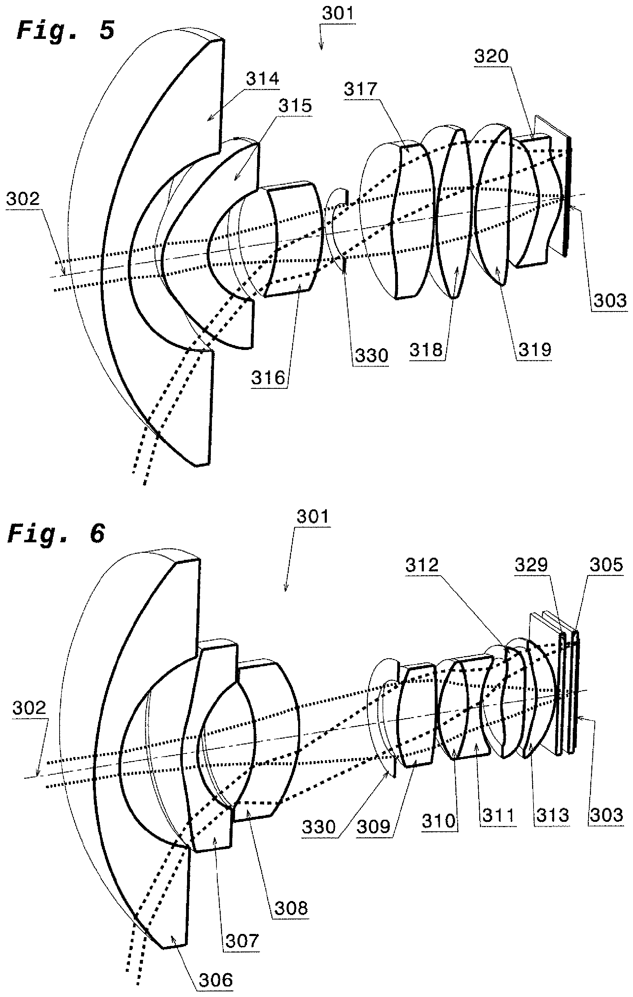

Nachfolgend wird die Aufnahmeeinheit 31 des Kamerasystems 130 genauer unter Bezug auf Figuren 3 und 4, die schematisch den Strahlendurchgang durch ein schematisch dargestelltes optisches Element in Schnittansicht bzw. in perspektivischer Ansicht (geschnitten) zeigen, sowie anhand von Figuren 5 und 6, die Ausführungsformen für einen Aufbau des optischen Elements schematisch zeigen, beschrieben.

Das optische Element 301 zusammen mit einem Bildsensor 302 bilden die wesentlichen Bestandteile der Aufnahmeeinheit 30 des Kamerasystems für ein Kraftfahrzeug. Das optische Element 301 ist, wie in Figuren 3 und 4 erkennbar, in der vorliegenden Ausführungsform im Wesentlichen rotationssymmetrisch um die optische Achse 302 gestaltet. Dies bedeutet, dass jeder Lichtstrahl, der von einem abzubildenden Gegenstandspunkt unter einem gleichen Winkel, beispielsweise $\alpha_1$, zur optischen Achse 302 in die Aufnahmeeinheit 30 einfällt, rotationssymmetrisch um die optische Achse mit derselben Verzeichnung auf der Bildsensorfläche 304 abgebildet wird. Der Winkel $\alpha$, der im Folgenden auch als Gegenstandswinkel $\alpha$ bezeichnet wird, entspricht einem Winkel, der der Einfallswinkel des Lichtstrahls in ein optisches Element 301 mit einer zur optischen Achse 302 senkrechten Einfallsfläche (virtuell nicht dargestellt) ist. Entsprechend wird jeder unter dem Gegenstandswinkel $\alpha_1$ einfallende Lichtstrahl im Abstand $r_1$ auf der Bildsensorfläche 304 zur optischen Achse 302 abgebildet. Die Bildsensorfläche 304 ist dabei diejenige Fläche, die tatsächlich für die Abbildung innerhalb des gesamten Bildöffnungswinkels des optischen Elements 301 zur Verfügung steht, das heißt diejenige Fläche des Bildsensors 302, die zur Abbildung geeignet ist und dem optischen Element 301 zugewandt ist.

In Figuren 3 und 4 sind für verschiedene Gegenstandswinkel $\alpha_1$, $\alpha_2$, ..., $\alpha_n$, rein schematisch die Strahlendurchgänge durch das optische Element 301 und deren Abbildung auf der Bildsensorfläche 304 des Bildsensors 303 in den Abständen $r_1$, $r_2$, ..., $r_n$ dargestellt. Da das optische Element 301 in der dargestellten Ausführungsform rotationssymmetrisch ist, ist der Abstand $r_1$, $r_2$, ..., $r_n$ und der Strahlengang durch das optische Element 301 ebenfalls rotationssymmetrisch zur optischen Achse 302. Die optische Achse 302, für die $\alpha = \alpha_0 = 0°$, $r = r_0 = 0$ ist, trifft im Ursprung einer Verzeichnungskurve ($\alpha = 0$; $r = 0$) eines $\alpha$, r-Koordinatensystems auf die Bildsensorfläche 304.

Das optische Element 301, das, wie in Figuren 5 und 6 schematisch dargestellt ist, aus einem Linsensystem und ggf. weiteren optischen Bauteilen aufgebaut ist, das mehrere hintereinander in Reihe angeordnete, jeweils rotationssymmetrische Linsen enthält, hat eine sogenannte Verzeichnungskurve $r = f(\alpha)$, welche ein geometrischer Abbildungsfehler des optischen Elements ist, der zu einer lokalen Veränderung des Abbildungsmaßstabs führt. Aufgrund der Rotationssymmetrie des optischen Elements 301 ist in der in Figuren 3 und 4 gezeigten Ausführungsform die Verzeichnungskurve $r = f(\alpha)$ ebenfalls rotationssymmetrisch zur optischen Achse 302.

Eine Ausführungsform für die Linsenanordnung ist in Figur 5 gezeigt. Dabei sind die sieben Linsen 314 bis 320 in Reihe auf dem Weg des einfallenden Lichts (von links nach rechts in Figur 5) angeordnet. Bei der Linse 314 handelt es sich um eine sphärische konvex-konkav Linse, bei der Linse 315 um eine sphärische konvex-konkav Linse. Die Linse 316 wird durch eine sphärische konkav-konvex Linse gebildet, die Linse 317 durch eine Linse mit Freiformfläche (asphärische Linse), die eine konvex-konkave und eine konkave Fläche hat, die Linse 318 ist eine sphärische bi-konvex Linse, die Linse 319 eine asphärische Linse mit einer konvexen und einer konvex-konkaven Fläche, und die Linse 320 eine asphärische Linse mit einer konkaven und einer konvex-konkaven Fläche. Die Freiformflächen der Linsen 317 und 320 sind ebenfalls jeweils rotationssymmetrisch, so dass das durch die sieben Linsen aufgebaute optische Element 301 der Ausführungsform in Figur 5 rotationssymmetrisch zur optischen Achse 302 ist. Vor dem Bildsensor 303 können bei der Ausführungsform in Figur 6 ebenso ein Sensorschutzglas 305 und ein Infrarotfilter 329 vorgesehen sein (siehe Ausführungsform in Figur 6). Auch hier weist das optische Element 301 den schematisch angedeuteten Strahlendurchgang auf, ebenso wie eine Verzeichnungskurve $r = f(\alpha)$ mit einem Wendepunkt im Bereich $0 < r < r_{max}$.

Bei der in Figur 6 gezeigten alternativen Ausführungsform des optischen Elements 301 enthält das optische Element 301 acht in Reihe entlang des Strahlengangs des einfallenden Lichts (von links nach rechts in Figur 6) angeordnete Linsen 306, 307, 308, 309, 310, 311, 312, 313. In der Reihenfolge, in der das einfallende Licht die Linsen auf dem Weg zum Bildsensor 303 passiert, ist die Linse 306 eine sphärische konvex-konkav Linse, die Linse 307 eine sphärische konvex-konkav Linse, die Linse 308 eine sphärische konkav-konvex Linse, die Linsen 309 und 310 jeweils eine sphärische bi-konvex Linse, die Linse 311 eine sphärische bi-konkav Linse, die Linse 312 eine Freiformlinse (asphärische Linse) mit einer rotationssymmetrischen konvex-konkav und einer konvex Oberfläche, und die Linse 313 eine asphärisch konkav-sphärische konvex Linse. Ferner ist vor dem Bildsensor 303 ein Sensorschutzglas 305 angebracht, ebenso wie ein Infrarotfilter 329 als ergänzende optische Bauteile. Mittels einer solchen Linsenanordnung wird das einfallende Licht, wie für einige Strahlen in Fig. 6 beispielhaft angegeben, durch das optische Element 301 geführt und abgelenkt. Dabei und durch die entsprechende Linsenanordnung weist das optische Element 301 in seiner Gesamtheit die Verzeichnungskurve r = f($\alpha$) auf, die im Bereich der Bildsensorfläche 304 $0 < r < r_{max}$ einen Wendepunkt hat.

Sowohl das in Fig. 5 gezeigte als auch das in Fig. 6 gezeigte optische System enthält als weiteres Bauteil eine Blende 303. Weitere Filter, Blenden etc. können nach Bedarf vorgesehen sein. Die ausgebildeten Linsen können z.B. aus Glas (vor allem sphärische Linsen) oder aus Kunststoff gebildet sein. Verschiedene Materialien können nach Bedarf kombiniert werden. Ebenso können die Linsen mit z.B. aufgedampften metallischen oder anderen Beschichtungen versehen sein, die in der Regel nicht die Lichtberechnung beeinflussen, sondern zum Beeinflussen der Streuung, Eliminierung unerwünschter Reflexion etc. dienen.

Die meisten der Linsen 307 bis 320 der in Figuren 5 und 6 gezeigten Ausführungsformen sind Linsen mit wenigstens einer teilkugelartigen Fläche. Beispielsweise die Linse 312, die Linse 317 und die Linse 320 sind jedoch sogenannte asphärische Linsen, welche zumindest eine Fläche aufweisen, die nicht teilkugelartig ist. Ferner ist es, auch wenn es in Figuren 5 und 6 nicht dargestellt ist, auch möglich, das optische Element 301 durch Auswahl geeigneter nicht zur optischen Achse 302 rotationssymmetrischer Linsen anamorph zu gestalten, so dass das optische Element eine zur optischen Achse nicht rotationssymmetrische Verzeichnungskurve aufweist.

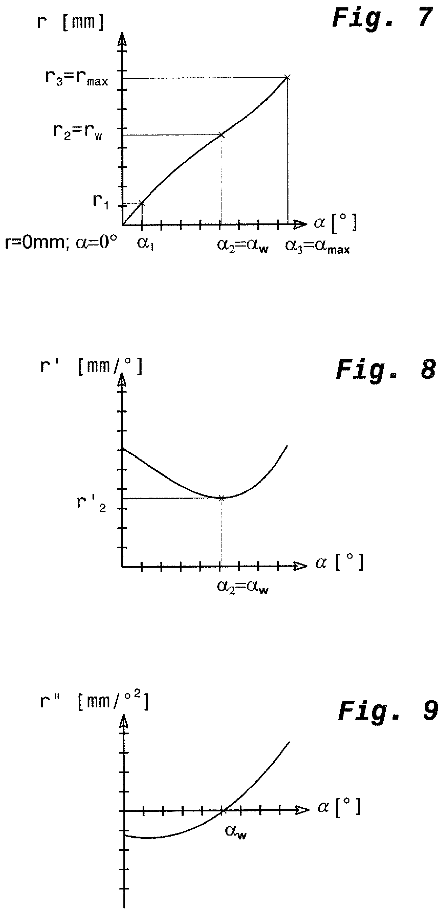

Mit den in Figuren 5 und 6 dargestellten Linsenanordnungen, die beispielhaft sind, können rotationssymmetrische Verzeichnungskurven r = f($\alpha$) des optischen Elements erzeugt werden, die eine Funktion r = f($\alpha$) sind, die innerhalb des maximalen Abstands $r_{max}$, der der maximale Abstand eines Punkts auf der Bildsensorfläche 304 zur optischen Achse 302 auf der Bildsensorfläche 304 ist, einen Wendepunkt ($\alpha_w$; $r_w$) aufweist. Damit die Verzeichnungskurve r = f($\alpha$) den Wendepunkt innerhalb von $0 < r(\alpha) < r_{max}$ aufweist, muss für ein $\alpha_w$, das einem Radius $r_w$ auf der Bildsensorfläche 304 entspricht, der kleiner als $r_{max}$ ist ($r_w < r_{max}$) gelten: $r'' = f'(\alpha_w) = d^2r/d\alpha^2 (\alpha = \alpha_w) = 0$; $r'' = f'(\alpha) < 0$ für $0 < \alpha < \alpha_w$; $r''' = f''(\alpha) > 0$ für $\alpha_w < \alpha < \alpha_{max}$. Eine solche Verzeichnungskurve, die durch beispielsweise die Linsenanordnungen des optischen Elements gemäß Figuren 5 und 6 erzeugt werden kann, ist schematisch in Figur 7 dargestellt. Ihre erste Ableitung ist in Figur 8 dargestellt und ihre zweite Ableitung ist in Figur 9 dargestellt.

Wie in Figur 7 in einem $\alpha$, r-Koordinatensystem gezeigt ist, ist im Bereich von [0; $r_{max}$] ein Wendepunkt ($\alpha_w$; $r_w$) vorhanden. Dazu ist bei einem bestimmten Gegenstandswinkel $\alpha = \alpha_2 = \alpha_w$, die zweite Ableitung (Figur 9) der Verzeichnungskurve Null, das heißt, sie hat bei $\alpha_w$ einen Nulldurchgang. Vor dem Wendepunkt, das heißt im Bereich von $0° < \alpha < \alpha_w$ ist, wie in Figur 9 erkennbar, die zweite Ableitung der Verzeichnungskurve r = f($\alpha$) negativ; für den Bereich $\alpha_w < \alpha < \alpha_{max}$ ist die Verzeichnungskurve positiv. Dies bedeutet, dass, wie in Figur 7 erkennbar, die Verzeichnungskurve r($\alpha$) in einem ersten Bereich von $0° < \alpha < \alpha_w$ rechtsgekrümmt ist und in einem zweiten Bereich von $\alpha_w < \alpha < \alpha_{max}$ linksgekrümmt ist.

Der Ursprung des $\alpha$, r-Koordinatensystem in Figur 7, das heißt r = 0 mm, $\alpha = 0°$, entspricht dem Punkt der optischen Achse 302 auf dem Bildsensor. $r_{max}$ ist der maximale Abstand, den ein Punkt auf dem Bildsensor von der optischen Achse 302 haben kann. Ist die optische Achse in einem rechteckigen Bildsensor zentrisch, das heißt im Flächenschwerpunkt angeordnet, wobei der rechteckige Bildsensor Kantenlängen a, b aufweist, so gilt: $r_{max} = \sqrt{a^2 + b^2}$ . Ist die optische Achse nicht zentrisch auf dem Bildsensor angeordnet, so ist der Abstand $r_{max}$ der Abstand zwischen der optischen Achse 302 auf der Bildsensorfläche 304 zur am weitesten entfernt liegenden Ecke der Bildsensorfläche 304.

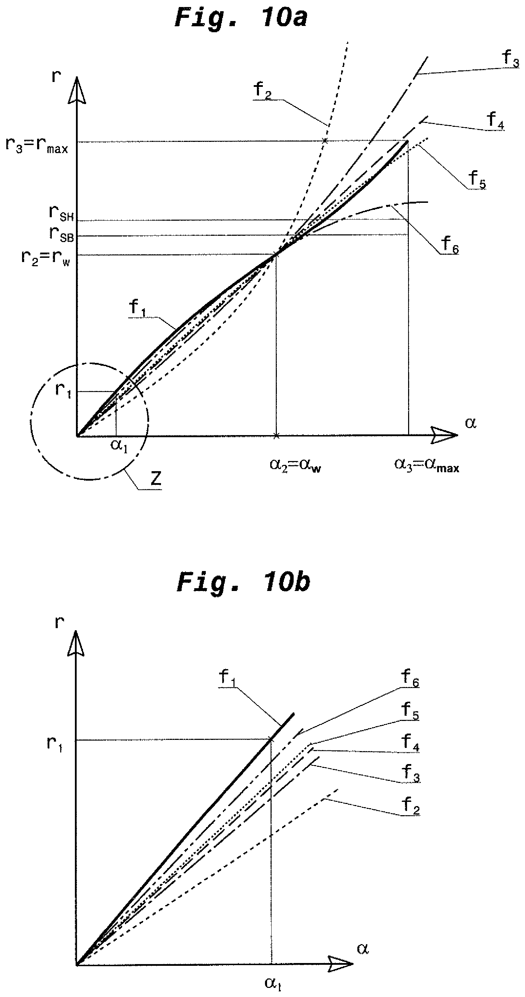

Figuren 10a und 10b zeigen, ebenfalls im $\alpha$, r-Koordinatensystem die Verzeichnungskurve r = f($\alpha$) für ein optisches Element 301 der Aufnahmeeinheit 30 im Vergleich zu verschiedenen Verzeichnungskurven des Stands der Technik. Dabei zeigt Figur 10b einen vergrößerten Ausschnitt Z im Bereich des Ursprungs des $\alpha$, r-Koordinatensystems. Die Verzeichnungskurve r = f($\alpha$), die im Bereich von $0 < \alpha < \alpha_{max}$ einen Wendepunkt ($\alpha_w$; $r_w$) aufweist, ist mit einer durchgezogenen Linie eingetragen und mit $f_1$ bezeichnet. $f_2$ bezeichnet eine gnomonische Verzeichnungskurve (verzeichnungsfrei), $f_3$ eine stereographische Verzeichnungskurve, das heißt eine winkeltreue Verzeichnungskurve, $f_4$ eine äquidistante Verzeichnungskurve, $f_5$ eine flächentreue Verzeichnungskurve und $f_6$ eine orthographische Verzeichnungskurve. Die Brennweiten bezüglich der Verzeichnungskurven sind dabei so gewählt, dass alle Verzeichnungskurven durch den Punkt ($\alpha_w$; $r_w$) verlaufen.

Wie aus Figur 10a und Figur 10b erkennbar ist, hat dabei die Verzeichnungskurve $f_1$ im Punkt ($\alpha_w$; $r_w$) einen Wendepunkt, bei dem sich die Krümmung der Verzeichnungskurve von rechtsgekrümmt (im Bereich $0 < \alpha < \alpha_w$) zu linksgekrümmt (im Bereich $\alpha_w < \alpha < \alpha_{max}$) ändert. Darüber hinaus ist, wie insbesondere Figur 10b entnehmbar ist, die Steigung der Verzeichnungskurve $f_1$ im nahe beim Ursprung des $\alpha$, r-Koordinatensystems liegenden Bereich, insbesondere im Vergleich zu den weiteren Verzeichnungskurven, groß. Dies bedeutet, dass ein verhältnismäßig großer Raum für die Abbildung eines verhältnismäßig kleinen Winkels auf dem Bildsensor 303 vorgesehen ist, was wiederum dazu führt, dass dieser in diesem Gebiet liegende Bereich mit hoher Auflösung abgebildet werden kann. Ferner ist die Steigung der Verzeichnungskurve r = $f_1(\alpha)$ im Wendepunkt ($\alpha_w$; $r_w$) minimal, das heißt im Wendepunkt an sich und in dessen unmittelbarer Umgebung liegt eine verhältnismäßig kleine Steigung vor. Schließlich ist für $\alpha_{max}$ vorzugsweise die Steigung der Verzeichnungskurve wiederum maximal bzw. verhältnismäßig groß, wie insbesondere der Abbildung in Figur 10a zu entnehmen ist.

Eine solche Verzeichnungskurve, wie sie in Figuren 7 bis 10b erläutert ist, wird beispielsweise durch eine Polynomfunktion $f(\alpha) = \sum_{i=0}^{n} \alpha_i \, \alpha^i$ beschrieben. Alternativ kann eine Spline-Funktion die Verzeichnungskurve beschreiben, die eine bereichsweise Polynomfunktion ist, das heißt die eine Funktion ist, die aus mehreren Polynom-Stücken zusammengesetzt ist, oder eine Bézierkurve, welche eine mathematisch formulierte Kurve (numerisch erzeugte Kurve) ist.

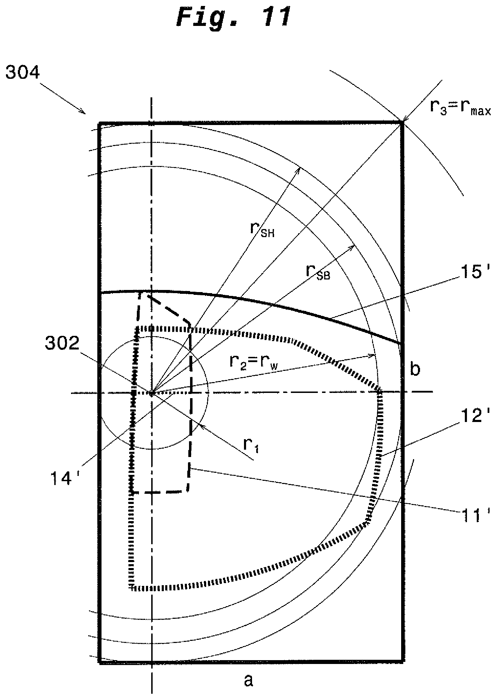

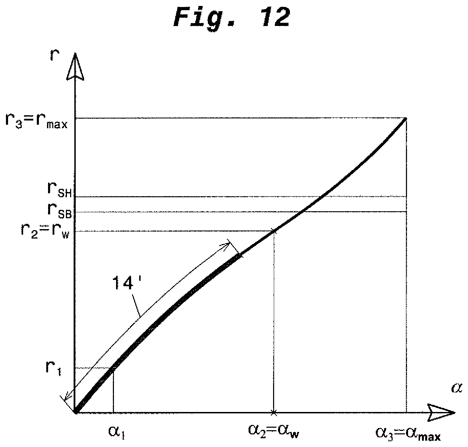

Unter Bezug auf Figur 11 und Figur 12 wird eine Abbildung der Sichtfelder 11, 12 für das Nutzfahrzeug 10 (Figur 2), die mittels des Kamerasystems 130 aufgenommen sind, auf der Bildsensorfläche 304 erläutert. Die Bildsensorfläche 304 des Bildsensors 303, die in Figur 11 dargestellt ist, ist rechteckig mit Seitenlängen a und b des Rechtecks. Wie in Figur 11 erkennbar ist, ist bei der dargestellten Ausführungsform die optische Achse 302 exzentrisch bezüglich der Bildsensorfläche 304 angeordnet, das heißt außerhalb des Flächenschwerpunkts der Bildsensorfläche 304. Insbesondere ist die optische Achse 302 außermittig bezüglich der Seite a der rechteckigen Bildsensorfläche 304. Damit ergibt sich ein maximaler Abstand $f_3 = r_{max}$ von der optischen Achse 302 auf der Bildsensorfläche 304 zu den am weitesten entfernt liegenden Ecken der Bildsensorfläche 304. Ferner sind, in Übereinstimmung mit Figuren 10a und 10b diejenigen Radien mit Mittelpunkt der optischen Achse 302 eingezeichnet, die durch den Wendepunkt der Verzeichnungskurve $r = f(\alpha)$ laufen ($r_2 = r_w$), ein Radius $r_{SB}$, der dem maximalen Abstand von der optischen Achse 302 zum Sensorflächenrand parallel zur Seitenlinie a entspricht; ein Radius $r_{SH}$, der dem maximalen Abstand von der optischen Achse 302 auf der Sensorfläche 304 zum Sensorflächenrand parallel zum Sensorrand b entspricht; sowie ein Radius $r_1$, welcher einem in Figuren 10a und 10b eingezeichneten ersten Radius $r_1$ bei einem Winkel $\alpha_1$ entspricht. In Figur 11 ist ferner die Abbildung 11' des Sichtfelds 11 des Hauptspiegels (siehe Figur 2) sowie die Abbildung 12' des Sichtfelds 12 des Weitwinkelspiegels (siehe Figur 2) eingetragen, ebenso wie eine Abbildung 15' der Horizontlinie. Wie erkennbar ist, ist insbesondere die Abbildung 11' des Sichtfelds 11 des Hauptspiegels in weiten Teilen in einem Bereich, der innerhalb des Radius $r_1$ liegt, so dass dieser Bereich innerhalb des Radius $r_1$ mit im Vergleich zu Normverzeichnungskurven des Stands der Technik erhöhter Auflösung abgebildet wird. Ferner kann die gesamte Abbildung 12' des Sichtfelds 12 des Weitwinkelspiegels auf demselben Bildsensor mit dem demselben optischen Element erfolgen. Es ist nicht erforderlich, ein zweites optisches Element und/oder einen zweiten Bildsensor vorzusehen und, zur Anzeige, die Bilder anschließend zusammenzusetzen.

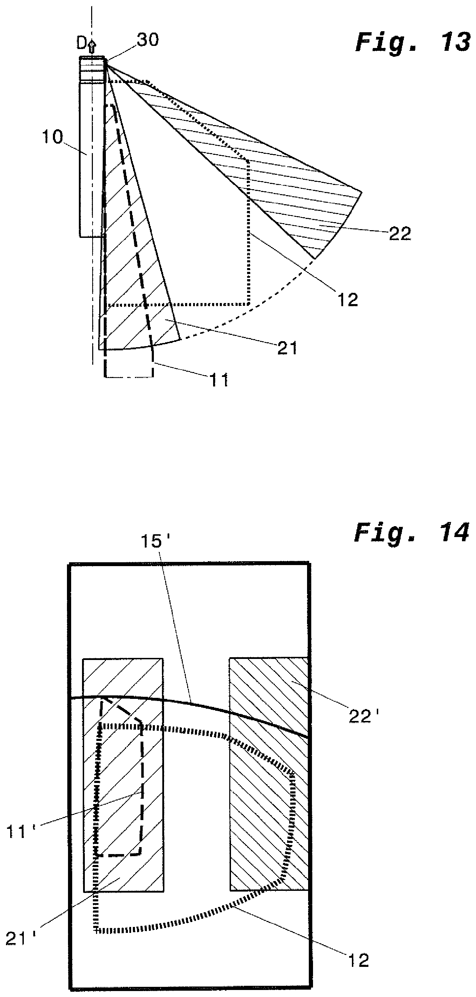

In Figur 11 ist ferner die Abbildung 14' der Sichtstrecke 14 (siehe Figur 2) eingetragen. Wie aus Figur 11 erkennbar ist, verläuft diese im Wesentlichen parallel zu einer Seitenkante der Bildsensorfläche 304 (der Seitenkante a).

In Figur 12 ist diese Abbildung 14' der Sichtstrecke ebenfalls in das $\alpha$, r-Koordinatensystem zusätzlich zur Abbildung der Verzeichnungskurve $r = f_1(\alpha)$ eingetragen. Dabei ist deutlich erkennbar, dass die gesamte Breite der Abbildung des Sichtfelds 11 des Hauptspiegels innerhalb desjenigen Bereichs von $0 < \alpha < \alpha_w$ liegt, der im rechtsgekrümmten Bereich der Verzeichnungskurve $r = f(\alpha)$ ist und somit eine hohe Auflösung mit sich bringt (speziell im Vergleich zu den Verzeichnungskurven herkömmlicher optischer Systeme).

Bei der vorliegenden beschriebenen Ausführungsform, bei der das Kamerasystem 130 für ein Spiegelersatzsystem 100 eines Fahrzeugs eingesetzt wird, kann eine Verarbeitungseinheit 120 des Spiegelersatzsystems 100 die auf dem Bildsensor 303 aufgenommenen Bilddaten anschließend auswerten und für einen Fahrer, der im Fahrerhaus eines Nutzfahrzeugs beispielsweise sitzt, einsehbar, zum Beispiel auf einem Monitor, darstellen. Bei der vorliegenden Ausführungsform werden dabei getrennte Gebiete für das Sichtfeld 11 eines Hauptspiegels und das Sichtfeld 12 eines Weitwinkelspiegels ausgelesen und, nach einer bevorzugten Ausführungsform (nicht dargestellt), dem Fahrer auch auf getrennten Bereichen der Wiedergabeeinheit 110 dargestellt. Die getrennten Bereiche können dabei beispielsweise auf einem gemeinsamen Monitor oder auf separaten Monitoren vorgesehen sein. Somit ist es möglich, das gewohnte Erscheinungsbild eines Haupt- und eines Weitwinkelspiegels für den Fahrer des Nutzfahrzeugs zu modellieren. Wird das Kamerasystem 130 beispielsweise im Rahmen eines Fahrerassistenzsystems eingesetzt, so können die interessierenden Bereiche der Bildsensorfläche 304 durch eine Verarbeitungseinheit 120 ebenfalls im Hinblick auf bestimmte Umgebungsinformation (z.B. Spurlinien, Verkehrszeichen, andere Verkehrsteilnehmer etc.) ausgewertet werden und, in Abhängigkeit von den erfassten und ermittelten Informationen, in die Fahrzeugsteuerung eingegriffen werden, dem Fahrer Hinweise oder Informationen angezeigt werden oder Ähnliches.

Bei einem Spiegelersatzsystem 100, wie es vorher beschrieben ist, ist es ferner möglich, abhängig von der Fahrsituation eines Fahrzeugs, beispielsweise eines Nutzfahrzeugs 10, aus unterschiedlichen Bereichen der Bildsensorfläche 304 Daten zur Darstellung auf der Wiedergabeeinheit 110 für den Fahrer zu extrahieren, d.h. zu verschiedenen Zeitpunkten des Fahrbetriebs verschiedene Bereiche der Bildsensorfläche 304 auszuwerten. Dies wird beispielhaft unter Bezug auf Figuren 13 und 14 erläutert.

Dabei zeigt Figur 13 eine Draufsicht auf ein Nutzfahrzeug in Vorwärts- bzw. Geradeausfahrt, wobei das Sichtfeld 11 eines Hauptspiegels und das Sichtfeld 12 eines Weitwinkelspiegels schematisch eingezeichnet sind. Figur 14 zeigt ebenfalls für den Fall der Geradeausfahrt die Bildsensorfläche 304 mit der Abbildung 11' des Sichtfelds 11 und der Abbildung 12' des Sichtfelds 12. Bei normaler Geradeausfahrt wird, wie bereits vorher erläutert, der Bereich 21' zur Darstellung des Sichtfelds 11 des Hauptspiegels bzw. zur Einsichtnahme für den Fahrer in das Sichtfeld 11 des Hauptspiegels aus den Daten in einem bestimmten, ersten Bereich auf der Bildsensorfläche 304 extrahiert. Ändert sich die Fahrsituation, so kann es sein, dass sich bei gleich ausgerichteter Aufnahmeeinheit 30 am Fahrzeug der interessierende Bereich vom ursprünglich interessierenden Bereich 21 in den verschobenen Bereich 22 ändert. Beispielsweise kann dies dann der Fall sein, wenn ein Nutzfahrzeug, insbesondere ein Nutzfahrzeug mit Trailer, eine Kurvenfahrt oder einen Rangiervorgang durchführt. In diesem Fall verschwenkt der interessierende Bereich, der dem Sichtfeld 11 des Hauptspiegels entspricht, wie es in Figur 13 dargestellt ist, in den Bereich 22. Mithilfe des Kamerasystems 130 mit der Aufnahmeeinheit 30 mit dem optischen Element 301, das die Verzeichnungskurve r = f(α) der beschriebenen Art aufweist, ist es möglich, auch den Bereich auf der Bildsensorfläche 304 zu verschieben aus dem Bildsensordaten extrahiert werden, so dass, wie es in Figur 14 dargestellt wird, Bilddaten eines Bereichs 22' auf der Bildsensorfläche 304 extrahiert werden. Dies ist möglich, ohne die erforderliche Genauigkeit der Bilddaten, das heißt insbesondere die Auflösung, zu verlieren, da die Verzeichnungskurve r = f(α) die erforderliche Auflösung und Verzeichnung in allen Bereichen, aus denen möglicherweise Daten extrahiert werden, ohne Datennachbearbeitung bereitstellen kann. Somit kann das Sichtfeld 11 bzw. dessen Abbildung 11' entsprechend der Fahrsituation nachgeführt werden. Es ist dazu keine mechanische Verstellung der Aufnahmeeinheit 30 erforderlich. Vielmehr kann dies ausschließlich durch Datenextraktion der Bilddaten des Bildsensors 304 in gewählten Bereichen erfolgen.

Diese Vorteile werden dadurch erzielt, dass zumindest eine Aufnahmeeinheit 30 verwendet wird, die ein optisches Element 301 mit einer Verzeichnungskurve r = f(α) aufweist, welche innerhalb des maximalen Abstands eines Punkts der Bildsensorfläche 304 zur optischen Achse 302 auf der Bildsensorfläche 304 einen Wendepunkt aufweist.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Die Erfindung ist in den Ansprüchen definiert.

Bezugszeichenliste

10    Nutzfahrzeug

11    Sichtfeld eines Hauptspiegels
12    Sichtfeld eines Weitwinkelspiegels
13    Seitenbegrenzungslinie
14    Sichtstrecke
11'    Abbildung des Sichtfelds 11
12'    Abbildung des Sichtfelds 12
14'    Abbildung der Sichtstrecke 14
15'    Abbildung der Horizontlinie
21'    extrahierter Bereich
22'    extrahierter Bereich
30    Aufnahmeeinheit
31    Aufnahmeeinheit
301    optisches Element
302    optische Achse
303    Bildsensor
304    Bildsensorfläche
305    Sensorschutzglas
306    Linse
307    Linse
308    Linse
309    Linse
310    Linse
311    Linse
312    Linse
313    Linse
314    Linse
315    Linse
316    Linse
317    Linse
318    Linse
319    Linse
320    Linse
329    IR-Filter
330    Blende
100    Spiegelersatzsystem
110    Wiedergabeeinheit
120    Verarbeitungseinheit
130    Kamerasystem
140    Fahrzeugsensor
150    Steuergerät
f    Verzeichnungskurve
$f_1$    Verzeichnungskurve
$f_2$    Verzeichnungskurve (verzeichnungsfrei, gnomonisch)
$f_3$    Verzeichnungskurve (winkeltreu, stereografisch)
$f_4$    Verzeichnungskurve (äquidistant)
$f_5$    Verzeichnungskurve (flächentreu, orthographisch)
$f_6$    Verzeichnungskurve (orthographisch)
$f_{\beta i}$    Verzeichnungskurve
a    Seitenrand der Bildsensorfläche
b    Seitenrand der Bildsensorfläche
D    Vorwärtsfahrtrichtung des Fahrzeugs
S    Schnittpunkt
α    Gegenstandswinkel des einfallenden Lichts
β    Rotationswinkel um die optische Achse
r    Abstand von einem Punkt auf der Bildsensorfläche zur optischen Achse

**Patentansprüche**

1. Spiegelersatzsystem, das Teil eines Nutzfahrzeugs (10) ist, und mit mindestens einem Kamerasystem (130), wobei das Kamerasystem (130) enthält: eine Aufnahmeeinheit (30), die ein optisches Element (301) und einen Bildsensor (303) mit einer Bildsensorfläche (304) enthält,
wobei

das optische Element (301) eine Verzeichnung mit einer Verzeichnungskurve $r = f(\alpha)$ aufweist, wobei r der Abstand eines auf der Bildsensorfläche (304) abgebildeten Gegenstandspunkts zum Schnittpunkt der optischen Achse (302) mit der Bildsensorfläche (304) ist und $\alpha$ der Winkel zwischen der optischen Achse (302) des optischen Elements (301) und dem vom Gegenstandspunkt in das optische Element (301) einfallenden Strahl ist,
die Verzeichnungskurve $r = f(\alpha)$ für $r_w = f(\alpha_w)$ einen Wendepunkt $(\alpha_w; r_w)$ innerhalb von $0 < r < r_{max}$ aufweist, für den gilt: $r'' = f'(\alpha_w) = d^2r/d\alpha^2 (\alpha_w) = 0$, wobei $r_{max}$ der Abstand $r = f(\alpha_{max})$ auf der Bildsensorfläche (304) von der optischen Achse (302) zu dem dazu am weitesten entfernt liegenden Randpunkt der Bildsensorfläche (304) ist, und
für die Krümmung der Verzeichnungskurve gilt:

$$r'' = f'(\alpha) < 0 \text{ für } 0° < \alpha < \alpha_w$$

$$r'' = f'(\alpha) > 0 \text{ für } \alpha_w < \alpha < \alpha_{max}.,$$

und

eine Verarbeitungseinheit (120) zum Verarbeiten der Daten der Aufnahmeeinheit (30) und/oder eine Wiedergabeeinheit (110) zur für den Fahrer des Fahrzeugs wahrnehmbaren Wiedergabe von mittels der Aufnahmeeinheit (30) erfasster Information, wobei
die Aufnahmeeinheit (30) angepasst ist, sowohl das Sichtfeld (11) eines Hauptspiegels gemäß ECE-R46 als auch das Sichtfeld (12) eines Weitwinkelspiegels gemäß ECE-R46 derselben Seite des Nutzfahrzeugs (10) zu erfassen,
wobei die optische Achse (302) des optischen Elements (301) der Aufnahmeeinheit (30) das Sichtfeld (11, 12) oder eines der Sichtfelder (11, 12) schneidet, und
wobei die optische Achse (302) des optischen Elements (301) eines der Sichtfelder (11, 12) in einem Schnittpunkt (S) im Abstand von maximal 5m zu einer Seitenbegrenzungslinie des Fahrzeugs kreuzt, wobei die Seitenbegrenzungslinie (13) eine Schnittlinie einer zur Fahrzeuglängsmittelebene parallelen Ebene, die durch einen am Fahrzeug (10) seitlich am weitesten außen liegenden Punkt des Fahrzeugs verläuft, mit der horizontalen, ebenen Fahrbahn ist.

2. Spiegelersatzsystem (130) nach Anspruch 1, wobei die Verzeichnungskurve $r = f(\alpha)$ genau einen Wendepunkt $(\alpha_w; r_w)$ innerhalb von $0 < r < r_{max}$ aufweist.

3. Spiegelersatzsystem (130) nach Anspruch 1 oder 2, wobei die Steigung $r' = dr/d\alpha$ der Verzeichnungskurve $r = f(\alpha)$ im Bereich $0° < \alpha < \alpha_w$ im Nullpunkt $r = f(0) = 0$ der Verzeichnungskurve maximal ist, oder wobei die Steigung $r' = dr/d\alpha$ der Verzeichnungskurve $r = f(\alpha)$ im Bereich $\alpha_w < \alpha < \alpha_{max}$ für $\alpha_{max}$ ($r = f(\alpha_{max}) = r_{max}$) der Verzeichnungskurve maximal ist, und/oder wobei die Steigung $r' = dr/d\alpha$ der Verzeichnungskurve $r = f(\alpha)$ im Wendepunkt $r = f(\alpha_w) = r_w$ der Verzeichnungskurve minimal ist.

4. Spiegelersatzsystem (130) nach einem der vorhergehenden Ansprüche, wobei die Verzeichnungskurve $r = f(\alpha)$ eine aus einer Polynomfunktion

$$f(\alpha) = \sum_{i=0}^{n} \alpha_i\, \alpha^i \qquad .$$

einer Spline-Funktion, oder
einer Bézierkurve ist.

5. Spiegelersatzsystem (130) nach einem der vorhergehenden Ansprüche, wobei der Flächenschwerpunkt der Bildsensorfläche (304) und der Schnittpunkt der optischen Achse (302) mit der Bildsensorfläche (304) nicht zusammenfallen, wobei insbesondere die optische Achse (302) bezüglich der Bildsensorfläche (304) außermittig angeordnet ist.

6. Spiegelersatzsystem (130) nach einem der vorhergehenden Ansprüche, wobei das optische Element (301) wenigstens eine asphärische Linse enthält, und/oder wobei das optische Element (301) wenigstens zwei zueinander unterschiedliche Linsen enthält.

7. Spiegelersatzsystem (130) nach einem der vorhergehenden Ansprüche, wobei das optische Element (301) eine zu seiner optischen Achse (302) rotationssymmetrische Verzeichnung aufweist, so dass die Verzeichnungskurven $r = f(\alpha)$ für jeden Rotationswinkel $\beta$ um die optische Achse (302) identisch sind.

8. Spiegelersatzsystem (130) nach einem der Ansprüche 1 bis 6, wobei das optische Element (301) eine zu seiner optischen Achse (302) nicht-rotationssymmetrische Verzeichnung aufweist, so dass eine erste Verzeichnungskurve $r_1 = f(\alpha)$ für einen Rotationswinkel $\beta_1$ um die optische Achse sich von einer

zweiten Verzeichnungskurve $r_2 = f(\alpha)$ für einen Rotationswinkel $\beta_2$ um die optische Achse unterscheidet.

9. Spiegelersatzsystem (130) nach Anspruch 8, wobei das optische Element (301) anamorph ist.

10. Spiegelersatzsystem nach einem der vorhergehenden Ansprüche, wobei das Spiegelersatzsystem angepasst ist, mindestens zwei Sichtfelder rund um das Fahrzeug für den Fahrer des Fahrzeugs einsehbar darzustellen, wobei vorzugsweise ein erstes Sichtfeld in einem ersten Bereich der Wiedergabeeinheit einsehbar ist und ein zweites Sichtfeld in einem zweiten, vom ersten Bereich optisch getrennten, Bereich der Wiedergabeeinheit einsehbar ist, wobei insbesondere das Spiegelersatzsystem angepasst ist, die Sichtfeldinformation der zwei Sichtfelder (11, 12) mittels einer gemeinsamen Aufnahmeeinheit (30) des Kamerasystems (130) zu erfassen und die Verarbeitungseinheit (120) angepasst ist, von der Aufnahmeeinheit (30) erhaltene Daten in die im ersten Bereich der Wiedergabeeinheit und im zweiten Bereich der Wiedergabeeinheit darzustellende Information zu trennen und zu extrahieren.

11. Spiegelersatzsystem nach Anspruch 10, wobei die Verarbeitungseinheit (120) angepasst ist, in Abhängigkeit von einer durch einen Sensor erfassten und der Verarbeitungseinheit (120) übermittelten Fahrtrichtung des Fahrzeugs die aus den von der Aufnahmeeinheit aufgenommenen Daten extrahierte Information für den ersten und/oder zweiten Bereich bezüglich ihrer Lage im von der Aufnahmeeinheit (30) aufgenommenen Bild anzupassen.

12. Spiegelersatzsystem nach einem der vorhergehenden Ansprüche, wobei das Spiegelersatzsystem zur visuellen Wiedergabe der durch die Aufnahmeeinheit (30) erfassten Information angepasst ist, und weiter angepasst ist, mindestens ein auf einem ebenen, horizontalen Teil der Fahrbahn liegendes Sichtfeld rund um das Fahrzeug für den Fahrer des Fahrzeugs auf der Wiedergabeeinheit (110) einsehbar darzustellen.

13. Spiegelersatzsystem nach einem der vorhergehenden Ansprüche, wobei eine zur Seitenbegrenzungslinie (13) rechtwinklige Sichtstrecke (14), die durch den Schnittpunkt (S) verläuft und durch die Begrenzung des Sichtfelds des Hauptspiegels begrenzt ist, im Bereich der Verzeichnungskurve $r = f(\alpha)$ für $0° < \alpha < \alpha_w$ mit $r'' = f'''(\alpha) < 0$ liegt, wobei bevorzugt der Wendepunkt $(\alpha_w; r_w)$ außerhalb der Sichtstrecke (14) liegt.

14. Fahrerassistenzsystem mit einem Spiegelersatzsystem nach einem der vorhergehenden Ansprüche.

**Claims**

1. A mirror replacement system, wherein the mirror replacement system is part of a commercial vehicle (10), comprising one or more camera systems (130), wherein the camera system (130) comprises: a capture unit (30), which comprises an optical element (301) and an image sensor (303) with an image sensor surface (304),
wherein

the optical element (301) has a distortion with a distortion curve $r = f(\alpha)$, wherein r is the distance of an object point depicted on the image sensor surface (304) to the intersection point of the optical axis (302) with the image sensor surface (304), and $\alpha$ is the angle between the optical axis (302) of the optical element (301) and the beam incident in the optical element (301) from the object point,
the distortion curve $r = f(\alpha)$ for $r_w = f(\alpha_w)$ has an inflection point $(\alpha_w; r_w)$ within $0 < r < r_{max}$, for which $r'' = f''(\alpha_w) = d^2r/d\alpha^2(\alpha_w) = 0$ applies, wherein $r_{max}$ is the distance $r = f(\alpha_{max})$ on the image sensor surface (304) from the optical axis (302) to the most distant boundary point of the image sensor surface (304),
and
for the curvature if the distortion curve

$$r'' = f''(\alpha) < 0 \text{ for } 0° < \alpha < \alpha_w$$

$$r'' = f''(\alpha) > 0 \text{ for } \alpha_w < \alpha < \alpha_{max} \text{ applies,}$$

and
a processing unit (120) to process the data of the capture unit (30) and/or a reproduction unit (110) for the reproduction of information captured using the capture unit perceptible to the driver of the vehicle,
wherein
the capture unit (30) is adapted to capture both the field of vision (11) of a main mirror according to ECE-R46, as well as the field of vision (12) of a wide-angle mirror according to ECE-R46 of the same side of the commercial vehicle (10),
wherein the optical axis (302) of the optical element (301) of the capture unit (30) intersects the field of vision (11; 12) or one of the fields of view (11; 12), and wherein the optical axis (302) of the optical element (301) crosses one of the fields of view (11; 12) in an intersection point (S) at a maximum distance of 5m to a lateral boundary line (13) of the vehicle, wherein the lateral boundary line (13) is an intersecting line of a plane parallel to the central longitudinal plane of the vehicle, which passes through a lateral outermost point of the vehicle (10), with the horizontal, plane road.

2. The mirror replacement system (130) according to claim 1, wherein the distortion curve $r = f(\alpha)$ has exactly one inflection point $(\alpha_w; r_w)$ within $0 < r < r_{max}$.

3. The mirror replacement system (130) according to claim 1 or 2, wherein the gradient $r' = dr/d\alpha$ of the distortion curve $r = f(\alpha)$ is maximal within the range $0° < \alpha < \alpha_w$ at the zero point $r = f(0) = 0$ of the distortion curve, or wherein the gradient $r' = dr/d\alpha$ of the distortion curve $r = f(\alpha)$ is maximal within the range $\alpha_w < \alpha < \alpha_{max}$ for $\alpha_{max}$ $(r = f(\alpha_{max}) = r_{max})$ of the distortion curve and/or wherein the gradient $r' = dr/d\alpha$ of the distortion curve $r = f(\alpha)$ is minimal at the inflection point $r = f(\alpha_w) = r_w$ of the distortion curve.

4. The mirror replacement system (130) according to any of the preceding claims, wherein the distortion curve $r = f(\alpha)$ is one of either

a polynomial function

$$f(\alpha) = \sum_{i=0}^{n} \alpha_i \, \alpha^i,$$

a spline function, or
a Bézier curve.

5. The mirror replacement system (130) according to any of the preceding claims, wherein the centroid of the image sensor surface (304) and the intersection point of the optical axis (302) with the image sensor surface (304) do not coincide, wherein in particular the optical axis (302) is disposed eccentrically with respect to the image sensor surface (304).

6. The mirror replacement system (130) according to any of the preceding claims, wherein the optical element (301) comprises one or more aspherical lenses, and/or wherein the optical element (301) comprises two or more lenses that are different from each other.

7. The mirror replacement system (130) according to any of the preceding claims, wherein the optical element (301) has a rotationally symmetric distortion with regard to its optical axis (302), such that the distortion curves $r = f(\alpha)$ are identical for every angle of rotation $\beta$ around the optical axis (302).

8. The mirror replacement system (130) according any of the claims 1 to 6, wherein the optical element (301) has a distortion that is not rotationally symmetric with regard to its optical axis (302), such that a first distortion curve $r_1 = f(\alpha)$ for an angle of rotation $\beta_1$ around the optical axis, differs from a second distortion curve $r_2 = f(\alpha)$ for an angle of rotation $\beta_2$ around the optical axis.

9. The mirror replacement system (130) according to claim 8, wherein the optical element (301) is anamorphic.

10. The mirror replacement system according to any of the preceding claims, wherein the mirror replacement system is adapted to display two of more fields of view surrounding the vehicle such that they are visible to the driver of the vehicle, wherein preferably a first field of vision is visible in a first region of the reproduction unit and a second field of vision is visible in a second, optically separated region of the reproduction unit, wherein especially the mirror replacement system is adapted to capture the field of vision information of the two fields of view (11, 12) by means of a joint/common capture unit (30) of the camera system (130), and the processing unit (120) is adapted to separate and extract the data received from the capture unit (30) into information to be displayed in the first region of the reproduction unit and in the second region of the reproduction unit, respectively.

11. The mirror replacement system according to claim 10, wherein the processing unit (120) is adapted to, depending on a driving direction of the vehicle captured, and transmitted to the processing unit (120) by a sensor, adjust the information extracted from the data captured by the capture unit for the first and/or second section in terms of to their position in the image captured by the capture unit (30).

12. The mirror replacement system according to any of the preceding claims, wherein the mirror replacement system is adapted to visually display the information captured by the capture unit (30), and is further adapted to display one or more fields of view lying on a plane, horizontal part of the road surrounding the vehicle, on the reproduction unit (110) such that it is visible to the driver of the vehicle.

13. The mirror replacement system according to any of the preceding claims, wherein a line of sight (14) perpendicular to the lateral boundary line (13), and that passes through the intersection point (S), and is limited by the limits of the field of vision of the main mirror, is in the range of the distortion curve $r = f(\alpha)$ for $0° < \alpha < \alpha_w$ with $r'' = f'''(\alpha) < 0$, wherein preferably, the inflection point $(\alpha_w; r_w)$ is beyond the of the line of sight (14).

14. A driver assistance system comprising a mirror replacement system according to any of the preceding claims.

## Revendications

1. Système de remplacement de miroir faisant partie d'un véhicule utilitaire (10) et comportant au moins un système de caméra (130), le système de caméra (130) comprenant : une unité d'acquisition (30) qui contient un élément optique (301) et un capteur d'image (303) présentant une surface de capteur d'image (304), dans lequel

   l'élément optique (301) présente une distorsion ayant une courbe de distorsion $r = f(\alpha)$, où r est la distance d'un point objet dont l'image est formée la surface de capteur d'image (304) par rapport au point d'intersection de l'axe optique (302) avec la surface de capteur d'image (304) et $\alpha$ est l'angle entre l'axe optique (302) de l'élément optique (301) et le rayon émanant du point objet et incident dans l'élément optique (301),
   la courbe de distorsion $r = f(\alpha)$ pour $r_w = f(\alpha_w)$ présente un point d'inflexion $(\alpha_w; r_w)$ dans l'intervalle $0 < r < r_{max}$, pour lequel on a $r'' = f''(\alpha_w) = d^2r/d\alpha^2(\alpha_w) = 0$, dans lequel $r_{max}$ est la distance $r = f(\alpha_{max})$ sur la surface de capteur d'image (304) depuis l'axe optique (302) jusqu'au point de bord de la surface de capteur d'image (304) qui en est le plus éloigné, et
   pour la courbure de la courbe de distorsion, on a :

   $$r'' = f''(\alpha) < 0 \text{ pour } 0° < \alpha < \alpha_w$$

   $$r'' = f''(\alpha) > 0 \text{ pour } \alpha_w < \alpha < \alpha_{max.},$$

   et
   une unité de traitement (120) destinée à traiter les données provenant de l'unité d'acquisition (30) et/ou une unité de reproduction (110) destinée à reproduire, de manière perceptible par le conducteur du véhicule, les informations acquises au moyen de l'unité d'acquisition (30),
   dans lequel
   l'unité d'acquisition (30) est conçue pour acquérir à la fois le champ de vision (11) d'un miroir principal selon ECE-R46 et le champ de vision (12) d'un miroir grand angle selon ECE-R46 du même côté du véhicule utilitaire (10),
   l'axe optique (302) de l'élément optique (301) de l'unité d'acquisition (30) coupant le champ de vision (11, 12) ou l'un des champs de vision (11, 12), et
   l'axe optique (302) de l'élément optique (301) croisant l'un des champs de vision (11, 12) en un point d'intersection (S) à une distance d'au plus 5 m d'une ligne de délimitation latérale du véhicule, la ligne de délimitation latérale (13) étant une ligne d'intersection d'un plan parallèle au plan longitudinal médian du véhicule, qui passe par un point du véhicule situé latéralement le plus à l'extérieur sur le véhicule (10), avec la chaussée horizontale et plane.

2. Système de remplacement de miroir (130) selon la revendication 1, dans lequel la courbe de distorsion $r = f(\alpha)$ présente exactement un point d'inflexion $(\alpha_w; r_w)$ dans l'intervalle $0 < r < r_{max}$.

3. Système de remplacement de miroir (130) selon la revendication 1 ou 2, dans lequel la pente $r' = dr/d\alpha$ de la courbe de distorsion $r = f(\alpha)$ est maximal dans la plage $0° < \alpha < \alpha_w$ au point zéro $r = f(0) = 0$ de la courbe de distorsion, ou dans lequel la pente $r' = dr/d\alpha$ de la courbe de distorsion $r = f(\alpha)$ est maximal dans la plage $\alpha_w < \alpha < \alpha_{max}$ pour $\alpha_{max}$ $(r = f(\alpha_{max}) = r_{max})$ de la courbe de distorsion, et/ou dans lequel la pente $r' = dr/d\alpha$ de la courbe de distorsion $r = f(\alpha)$ au point d'inflexion $r = f(\alpha_w) = r_w$ de la courbe de distorsion est minimal.

4. Système de remplacement de miroir (130) selon l'une quelconque des revendications précédentes, dans lequel la courbe de distorsion $r = f(\alpha)$ est l'une

   d'une fonction polynomiale

   $$f(\alpha) = \sum_{i=0}^{n} \alpha_i \, \alpha^i,$$

   d'une fonction spline, ou
   d'une courbe de Bézier.

5. Système de remplacement de miroir (130) selon l'une quelconque des revendications précédentes, dans lequel le centre de géométrie de la surface de capteur d'image (304) et le point d'intersection de l'axe optique (302) avec la surface de capteur d'image (304) ne coïncident pas, l'axe optique (302) étant en particulier disposé de manière excentrée par rapport à la surface de capteur d'image (304).

6. Système de remplacement de miroir (130) selon l'une quelconque des revendications précédentes, dans lequel l'élément optique (301) contient au moins une lentille asphérique et/ou dans lequel l'élément optique (301) contient au moins deux lentilles différentes l'une de l'autre.

7. Système de remplacement de miroir (130) selon l'une quelconque des revendications précédentes, dans lequel l'élément optique (301) présente une distorsion symétrique de rotation par rapport à son axe optique (302), de sorte que les courbes de distorsion r = f($\alpha$) sont identiques pour chaque angle de rotation $\beta$ autour de l'axe optique (302).

8. Système de remplacement de miroir (130) selon l'une quelconque des revendications 1 à 6, dans lequel l'élément optique (301) présente une distorsion non symétrique de rotation par rapport à son axe optique (302), de sorte qu'une première courbe de distorsion $r_1$ = f($\alpha$) pour un angle de rotation $\beta_1$ autour de l'axe optique est différente d'une seconde courbe de distorsion $r_2$ = f($\alpha$) pour un angle de rotation $\beta_2$ autour de l'axe optique.

9. Système de remplacement de miroir (130) selon la revendication 8, dans lequel l'élément optique (301) est anamorphique.

10. Système de remplacement de miroir selon l'une quelconque des revendications précédentes, dans lequel le système de remplacement de miroir est conçu pour présenter au moins deux champs de vision autour du véhicule de manière visible pour le conducteur du véhicule, dans lequel, de préférence, un premier champ de vision est visible dans une première zone de l'unité de reproduction et un second champ de vision est visible dans une seconde zone de l'unité de reproduction, laquelle seconde zone est séparée optiquement de la première zone, le système de remplacement de miroir étant notamment conçu pour détecter les informations de champ de vision des deux champs de vision (11, 12) au moyen d'une unité d'acquisition commune (30) du système de caméra (130), et l'unité de traitement (120) étant conçue pour séparer et extraire des données reçues de l'unité d'acquisition (30) les informations à présenter dans la première zone de l'unité de reproduction et dans la seconde zone de l'unité de reproduction.

11. Système de remplacement de miroir selon la revendication 10, dans lequel l'unité de traitement (120) est conçue pour adapter, en fonction d'un sens de marche du véhicule, détecté par un capteur et transmis à l'unité de traitement (120), les informations extraites des données acquises par l'unité d'acquisition pour la première et/ou la seconde zone par rapport à leur position dans l'image acquise par l'unité d'acquisition (30).

12. Système de remplacement de miroir selon l'une quelconque des revendications précédentes, dans lequel le système de remplacement de miroir est conçu pour reproduire visuellement des informations acquises par l'unité d'acquisition (30), et est en outre conçu pour présenter sur l'unité de reproduction (110) au moins un champ de vision situé sur une partie plane et horizontale de la chaussée autour du véhicule, de manière visible pour le conducteur du véhicule.

13. Système de remplacement de miroir selon l'une quelconque des revendications précédentes, **caractérisé en ce qu'**une ligne de visée (14) perpendiculaire à la ligne de délimitation latérale (13), qui passe par le point d'intersection (S) et est délimitée par la délimitation du champ de vision du miroir principal, se situe dans la zone de la courbe de distorsion r = f($\alpha$) pour 0° < $\alpha$ < $\alpha_w$ avec r" = f"($\alpha$) < 0, le point d'inflexion ($\alpha_w$ ; $r_w$) se situant de préférence à l'extérieur de la ligne de visée (14).

14. Système d'assistance à la conduite comprenant un système de remplacement de miroir selon l'une quelconque des revendications précédentes.

# Fig. 1

Fig. 2

## *Fig. 3*

## *Fig. 4*

**Fig. 5**

**Fig. 6**

r [mm]                                                    *Fig. 7*

$r_3=r_{max}$

$r_2=r_w$

$r_1$

$\alpha$ [°]

r=0mm; $\alpha$=0°    $\alpha_1$    $\alpha_2=\alpha_w$   $\alpha_3=\alpha_{max}$

r' [mm/°]                                                 *Fig. 8*

$r'_2$

$\alpha$ [°]

$\alpha_2=\alpha_w$

r" [mm/°²]                                                *Fig. 9*

$\alpha$ [°]

$\alpha_w$

## Fig. 10a

## Fig. 10b

# *Fig. 11*

# Fig. 12

**Fig. 13**

**Fig. 14**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2006343545 B
- JP 2009058648 B
- EP 2881927 A1
- DE 102010032411 A1
- EP 2623374 B1